# EUROPEAN PATENT APPLICATION

(11) **EP 4 432 555 A2**
(43) Date of publication of application: **18.09.2024**
(21) Application number: 24163208.2
(22) Date of filing: 13.03.2024
(51) Int. Cl.: H02S 20/00, F24S 25/50, H02S 20/10

(54) **APPARATUS, SYSTEM, AND METHOD FOR VERTICAL SOLAR PANELS**

(30) Priority: 14.03.2023 US 202363490112 P; 15.11.2023 US 202363599007 P; 28.02.2024 US 202463558950 P
(71) Applicant: Solaredge Technologies Ltd., Herzeliya 4673335 (IL)
(72) Inventor: SHAFAT, Bahat, 4673335 Herzeliya (IL); SCHNEIDER, Matan, 4673335 Herzeliya (IL); SHKOURY, Roy, 4673335 Herzeliya (IL); GALIN, Yoav, 4673335 Herzeliya (IL); GERSHMAN, Israel, 4673335 Herzeliya (IL); LOEWENSTERN, Yakir, 4673335 Herzeliya (IL)
(74) Representative: V.O.

(57) **Abstract**

Systems, apparatuses, and methods are described for vertical solar panels. Prefabricated and/or preassembled solar panels may be deployed fast, for example, by using a special packaging. Support structures may be easily installed to support (e.g., hang) the solar panels. The solar panels may be pretensioned and/or comprise structural designs (e.g., holes, frames, flexibility, etc.) to have reliability and/or longevity under a hanging condition and wind impact. The heights of vertically-installed solar panels may be dynamically adjusted, for example, based on inputs from sensors and/or time of day. Inter-row shading may be changed based on height adjustment among multiple rows of vertical solar panels.

## Description

### CROSS-REFERENCE TO RELATED APPLICATIONS

This application claims the benefit of U.S. Provisional Application No. 63/490,112 filed on March 14, 2023, U.S. Provisional Application No. 63/599,007 filed on November 15, 2023, and U.S. Provisional Application No. 63/558,950 filed on February 28, 2024. The above referenced applications are hereby incorporated by reference in their entirety for all purposes.

### BACKGROUND

Photovoltaic solar panels, also referred to as solar panels or as photovoltaic (PV) panels, typically absorb sunlight and use irradiant energy in the sunlight in order to generate direct current (DC) electricity. Solar panels include an array of photovoltaic cells. A plurality of photovoltaic cells joined together may also be referred to as a photovoltaic module or PV module. Solar panels or PV modules are often placed atop support structures, for example, beams, which hold the solar panels in place, so that the solar panels might not shift or fall, whether due to environmental conditions, catastrophic events, and so forth. Installing the solar panels to the support structures may take considerable labor and time, due to the large number of panels, weight, and requirement for precise alignment and secure attachment. Special equipment such as crane may be needed, which may add to the cost. The solar panels may experience damage, deformation, etc. over time, due to gravity and outside forces like wind. The solar panels may experience shading, which may affect power generation.

### SUMMARY

The following summary presents a simplified summary of certain features. The summary is not an extensive overview and is not intended to identify key or critical elements.

Apparatuses, systems, and methods are described for solar panels or PV panels or PV modules, especially generally vertical (or vertically installed, e.g., hanging) solar panels. For example, the vertical solar panels may be bifacial. A plurality of solar panels may be prefabricated and preassembled. For example, a set of prefabricated solar panels may be equipped with electrical components and interconnected (e.g., via spacers). The solar panels may be installed in a packaging (e.g., a container) which may comprise structures for deploying the solar panels. The prefabricated and preassembled solar panels may be deployed and installed in a simple, easy, and fast way, without the need for using any special equipment and/or machines.

The solar panels may be configured for hanging when installed. The solar panels may be prefabricated to have a structure that is suitable for hanging. For example, the solar panels may be prefabricated using preload (e.g., stretched wires) and molding materials (e.g., polymer). For example, metal tabs may be embedded between polymer layers and be used for hanging. For example, a solar panel may comprise one or more flexible joints to allow movements with the wind and to prevent excessive rotations (e.g., flip). Holes and/or frames may be used to improve weight/force distribution in a context of wind. The solar panels may be at least partially flexible. The solar panels may comprise connection structures (e.g., rings, U-bolts) configured to attach to a hanging structure (e.g., a cable) with ease. The solar panels may be pre-rolled on a selected core which may be part of a mounting structure (e.g., a pole, rack).

The heights of the vertically-installed solar panels may be dynamically adjusted. A height may be adjusted, for example, based on inputs from sensors and/or based on time of day. A height may be adjusted by changing the tension of a cable (e.g., increasing/reducing the sag of the cable) which may hang the solar panels. A height may be adjusted via various other means, for example, adjustable poles, etc. For multiple rows of vertically-installed solar panels, the heights of the solar panels may be adjusted in a way that inter-row (or interrow) shading may be increased/decreased. Sensors such as irradiance sensors or other types of sensors may be used for measuring solar radiation and/or shading. Alternatively or additionally, power electronic devices such as optimizers may be used as sensors, for example, for measuring the inter-row shading.

These and other features and advantages are described in greater detail below.

### BRIEF DESCRIPTION OF THE DRAWINGS

Some features are shown by way of example, and not by limitation, in the accompanying drawings. In the drawings, like numerals reference similar elements.
FIG. 1A shows an example array of vertical solar panels installed on a support structure. FIG. 1B shows a simplified view of an example whole support structure with installed vertical solar panels.
FIG. 1C, FIG. 1D, FIG. 1E, and FIG. 1F show examples of variations of an additional cable and/or wire within a row of vertical solar panels.
FIG. 1G and FIG. 1H show examples of an additional cable and/or wire across rows of vertical solar panels.
FIG. 2A shows an example of vertical solar panels connected to a cable. FIG. 2B shows an example of vertical solar panels connected to two cables.
FIG. 3 shows an example of a prefabrication.
FIG. 4 shows an example of a prefabrication.
FIG. 5 shows an example of deploying a prefabrication to a support structure.
FIG. 6A to FIG. 6D show a main structure and different modes of an example connector.
FIG. 7A shows an example of preload for manufacturing a solar panel. FIG. 7B shows an example of afterload for manufacturing a solar panel.
FIG. 8A shows an example cross-sectional side view of a solar panel embedded with a reinforcing structure connected to a cable. FIG. 8B shows an example cross-sectional front view of a solar panel embedded with a reinforcing structure connected to a cable.
FIG. 9A, FIG. 9B, and FIG. 9C show an example of a hanging solar panel with flexible joints.
FIG. 10A shows an example of holes in a solar panel. FIG. 10B shows an example of connection variations for solar panels using selected holes.
FIG. 10C shows an example of connections between solar panels and power electronic devices (e.g., optimizers) using selected holes.
FIG. 10D shows an example of larger holes in solar panels.
FIG. 11A to FIG. 11H show examples of one or more frames connected to a solar panel with or without holes.
FIG. 12A to FIG. 12D show an example of a frame mounted to a solar panel.
FIG. 13A, FIG. 13B, and FIG. 13C show an example of mounting solar panels from two sides.
FIG. 14A to FIG. 14D show examples of different frames for a solar panel.
FIG. 15A and FIG. 15B show an example of fast deployment for solar panels.
FIG. 15C shows examples of pre-rolled solar panels on selected cores. FIG. 15D shows an example of fast deployment for solar panels. FIG. 15E shows another example of fast deployment for solar panels.
FIG. 16A shows an example array of vertically-installed solar panels that have a same height between rows at a first time of day.
FIG. 16B shows an example array of vertically-installed solar panels that have a same height between rows at a second time of day.
FIG. 16C shows an example array of vertically-installed solar panels that have different heights between rows at the second time of day.
FIG. 17 shows an example of vertically-installed solar panels that achieve different heights between rows using sag control.
FIG. 18A and FIG. 18B show an example of adjusting the height of vertically-installed solar panels.
FIG. 19A shows an example of adjusting the height of vertically-installed solar panels.
FIG. 19B shows an example of adjusting the height of vertically-installed solar panels.
FIG. 20A and FIG. 20B show an example of adjusting the height of vertically-installed solar panels.
FIG. 21A shows an example control system for adjusting the height of vertically-installed solar panels.
FIG. 21B shows another example control system for adjusting the height of vertically-installed solar panels.
FIG. 22 shows an example method of adjusting the height of vertically-installed solar panels.

### DETAILED DESCRIPTION

The accompanying drawings, which form a part hereof, show examples of the disclosure. It is to be understood that the examples shown in the drawings and/or discussed herein are non-exclusive and that there are other examples of how the disclosure may be practiced.

Vertical (or vertically-installed, e.g., hanging) solar panels (or PV panels, PV modules, etc.) may refer to solar panels that may be mounted vertically (e.g., perpendicular or substantially perpendicular to the ground) and use a vertical or substantially vertical position as their working position. Compared to horizontal solar panels which may be installed and work at a non-vertical position (e.g., at an angle that is not perpendicular or substantially perpendicular to the ground), vertical solar panels may have advantages such as reducing shading, space, accumulation/impact of dust, snow, hail, etc., increasing heat convection, use of land, easier to clean, and/or so on. For example, a vertical configuration may receive less impact from hail. Therefore, for example, a glass sheet protecting the solar panel may be made thinner (e.g., less than around 3.2mm, less than around 2.5mm, or even less than 2mm), and/or cheaper materials may be used such as a light weight polymer or ceramic. A vertical solar panel may be bifacial or have two oppositely oriented working sides. For example, the two sides may face the east and the west, respectively. As a result, the vertical bifacial panels may generate more electricity in the morning and late afternoon than at around noon time as may be the case for horizontal solar panels. This feature of power generation may fit better with power demand, as people may use more electricity when they are at home in the morning and in the evening. Instead of having peak power generated at noon wasted or stored, electricity generated by the vertical bifacial panels may be utilized timely, and storage cost (e.g., cost for big capacity batteries) may be reduced.

A (e.g., each) solar panel may be disposed generally vertically. For example, a (e.g., each) solar panel may be configured to be mounted on a hanging (or suspension) structure (e.g., a cable, beam, etc.) and/or be mounted on a support structure (e.g., poles, etc.) that supports vertical positions of the solar panels. For example, one or more edges of the solar panel may comprise mechanical coupling (e.g., connectors, rings, clamps, etc.) for mounting to a hanging structure such as a hanging cable (or beam, pole, etc.). A set of solar panels/modules may be folded (e.g., at spacers) so that one panel may be stacked on top of another. Alternatively or additionally, a set of solar panels may be at least partially flexible. The solar panels may be in a rolled position before deployment. The solar panels may be preassembled with part of mounting structures for faster deployment. For example, the solar panels may be preassembled with the hanging structure. For example, the solar panels may be preassembled together and disposed in a packaging (e.g., container) arranged for shipping the panels. The panels may be easily deployed onto a support structure such as the hanging structure (e.g., a generally horizontal cable). The set of panels and the packaging may be connected using additional structures to enable relative movement of the panels with respect to the packaging. For example, the panels and the packaging may have a rail/roller structure, or loading cable connector so that the panels/modules may move in/along/out of the packaging in an easy, guided and controllable way. The packaging may be used to transport the panels. The packaging may be used to deploy the panels at an installation site (e.g., agricultural field, parking lot, between power poles/power transmission towers, highway, building rooftop, and/or ground mount).

A support structure for mounting the panels may be installed at the installation site. The support structure may comprise ground supports. For example, the support structure may comprise at least two poles (e.g., anchoring poles). The poles may comprise anchors (e.g., helical piles, beam piles, regular piles, piers, or any existing anchoring means that may meet the constructional needs). The support structure may comprise a hanging structure (e.g., a hanging cable stretchable between the at least two poles). Alternatively or additionally, the support structure may directly support the vertical solar panels (e.g., like a flagpole). The support structure may comprise other structures such as stabilizing structures (e.g., one or more anchoring cables). The anchoring cables may comprise anchors (e.g., helical piles, beam piles, regular piles, piers, or any existing anchoring means that may meet the constructional needs), for example, for stabilizing the at least two poles. The support structure may be installed by forcing/driving/rotating the anchors (e.g., helical piles, etc.) into the ground with or without an angle. The packaging with the set of panels may be aligned with the hanging cable and be attached to at least one pole. The set of panels may move out of the packaging and onto the hanging cable sequentially, e.g., one by one. The panels may be coupled to the cable using, for example, at least one connector, and may be slid on the hanging cable and fixed in a predetermined position. A locking mechanism may be included on the panels to fix the panels in a predetermined position along the hanging cable. For example, each connector may be designed to have more than one mode (e.g., an open mode, a sliding mode, a lock mode) to support the deployment and installation of the panels. The panels may be prefabricated to comprise the connectors. The panels may be prefabricated with both connectors and the hanging cable. The hanging cable may be fixed (e.g., threaded) to the connectors at predetermined positions. The hanging cable may be detachable from (or not fixed to) the connectors.

These solar panel/modules may be deployed at an installation site such as an agricultural field, a parking lot, between power poles/power transmission towers, a highway, a building rooftop, and/or a ground mount, and may create extra electricity and/or income for farmers, government entities, parking lots and/or building owners. Because the solar panels/modules are spaced from the ground surface and suspended high overhead (e.g., 14'), vehicles, tractors, and people may pass under the panels with little hinderance. The vertical solar panels may have lower requirement for the land. For example, there may be no need to flatten or level a land. The panels can be along contour lines and/or up and down slopes. Space not only between rows of panels but also under them may be used to grow crops, raise livestock, allow passage of people, animals, and vehicles, etc. For example, support lines may be arranged along contour lines so that maintenance can be easily performed without damaging the crops, as most crop rows run along the contour lines. Maintenance vehicles can drive along the rows without damaging the crops while still maintaining the lines. Support structures such as poles may be used to install the vertical solar panels. The solar panels may be mounted directly on the poles (e.g., on a frame structure of the poles). It may be beneficial to reduce the number of poles, so that more continuous space under the solar panels may be created.

The vertical and/or hanging solar panels may be affected by gravitational loads and wind loads, and their impacts may accumulate over time. For example, a hanging solar panel may comprise deformable materials such as polymer, which may degrade or deform (e.g., be elongated, "creep") due to gravity. For example, a wind may cause a hanging solar panel to flip, which may affect the stability of vertical solar panels or even cause damage. The solar panels may comprise structural designs that help increase reliability and life expectancy.

Vertical solar panels may be at least partially shaded, for example, when the sun is not directly upward (e.g., when the sun is in the east or in the west). The vertical solar panels may be shaded by objects nearby, for example, high plants, tall trucks, etc. More likely, some vertical solar panels may be shaded by other vertical solar panels. For example, in a field, vertical solar panels may be installed in multiple rows. These rows may have intervals (e.g., between 1 to 10 meters, or between around 3 to 33 feet) between them. One row of solar panels may at least partially block and/or cast a shadow on another row of solar panels, for example, when the sun is in the east or in the west. This may be referred to as inter-row shading. Inter-row shading may affect power generation of solar panels that are at least partially shaded. Shading may need to be reduced for generating more power out of sunlight. In some situations, shading may be preferred, as output power of a solar panel may need to be curtailed, for example, for the benefit of transmission grid stability and/or system stability/performance. For example, a grid operator may impose a penalty (e.g., a fine) for injecting power sometimes. It may be better to curtail power output via shading than curtailment at the power electronics level, as less heat may be generated by the solar panels.

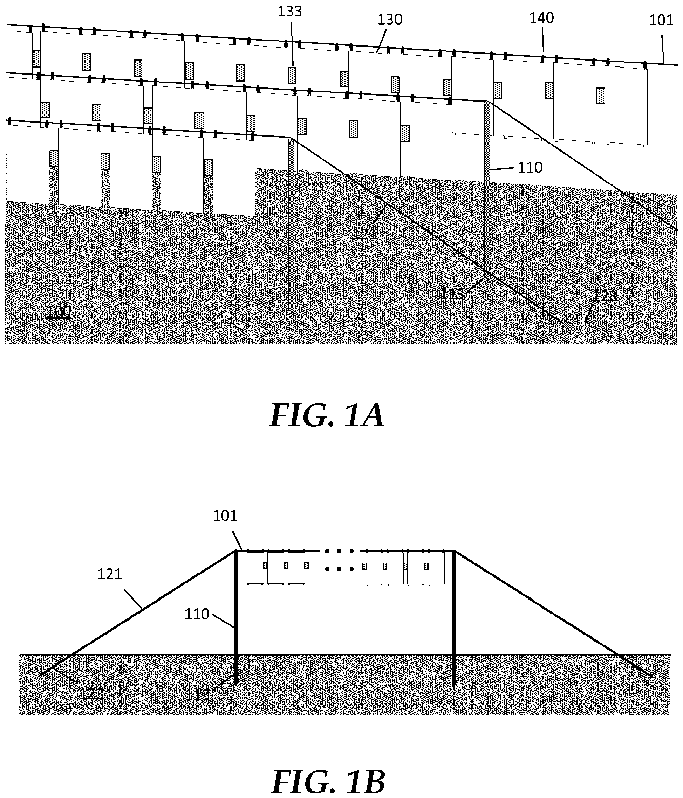

FIG. 1A shows an example array of vertical solar panels installed on a support structure. FIG. 1B shows a simplified view of an example whole support structure with installed vertical solar panels. As shown in FIG. 1A, there may be a plurality of rows of vertical solar panels set up on a field and/or ground 100. These rows may be adjacent to each other or far apart from each other. As shown in FIG. 1A and/or FIG. 1B, each row of vertical solar panels may be installed on a support structure that may comprise a cable (or hanging cable) 101, at least two poles 110, at least two cables (or anchoring cables) 121, and anchors (e.g., helical piles, etc.) 113, 123. The cable 101 may be configured to be mounted/suspended on/in/at the at least two poles 110. The cable may be adjustable in length and/or tension to accommodate to different situations, for example, different distances between the poles, different weights of the solar panels, different drag forces caused by wind, and/or so on. The cable may be made of steel. The cable may be made of/from any other materials (e.g., other metals, high-strength glass fibers, high-strength plastic fibers, their combinations, and/or so on), as long as the material meets at least some of the needs of the cable, such as high strength, wear-resistant, relatively light weight, etc. The cable 101 may be mounted/suspended on/in/at the at least two poles 110 by any mechanism that may apply. For example, the mechanism may be a friction structure (e.g., tying structure, gear structure, pulley structure, etc.) that may secure the position of the cable via friction. The mechanism may be a structure using forces and/or tensions from air (e.g., vacuum), liquid, magnets, etc. The mechanism may be adjustable or non-adjustable. The mechanism may form a part with the cable, the poles, and/or both. The mechanism may be detachable from the cable and/or the poles. The at least two poles 110 may be configured to be mounted on/in the ground 100. For example, a pole 110 may comprise an anchor 113 at an end. The pole may be adjustable in length. The pole may be solid or hollow. The pole may be made in shapes, sizes, and/or materials that meet the constructional specifications that change from site to site. For example, the pole may be made of steel and/or any other materials that may satisfy mechanical requirement such as high strength, stability, etc. As mentioned previously, the pole may comprise part or whole of a mechanism for mounting and/or securing the cable. Each of the at least two cables 121 may extend from one of the at least two poles 110 and to/into the ground 100 for further stabilizing and/or securing the support structure and/or for securing/stretching the cable 101. A cable 121 may be different from the cable 101. The cable 121 may be the same as the cable 101. For example, the cable 121 may be an extension of the cable 101. The cable 121 may be made of a similar material as that of the cable 101. The cable 121 may be made of a different material as that of the cable 101. The cable 121 may use the same or a different mechanism to be mounted to the pole 110, compared to cable 101. The cable 121 may have a mechanism that creates and/or maintains the tension of the cable. The cable 121 may comprise an anchor 123 at an end for fixing the cable 121 to the ground 100. The anchor 123 may serve one cable 121. Alternatively, the anchor 123 may serve more than one cable 121. For example, the anchor 123 may serve a cable 121 from a current row and another cable 121 from an adjacent row. The anchors 113 and 123 may be helical/helix anchors (e.g., helical piles) which may comprise at least one helical and/or spiral structure on a shaft. The at least one helical and/or spiral structure may comprise sharp edges to cut through the ground 100. The shaft may comprise a pointed and/or sharp end for penetrating through the ground 100. The at least one helical and/or spiral structure may be attached to the shaft through welding etc., or may be integrally formed with the shaft. The helical/helix anchors (e.g., helical piles) may be fast and easy to install in a ground and thus may save time and labor. The anchors 113 and 123 may be any other anchors, for example, beam piles, regular piles, piers, or any existing anchoring means that may meet the constructional needs, as long as the anchors may hold and/or stabilize the poles and the cables to the ground. The anchors 113 and 123 may be the same type of anchors or may be different types of anchors. Same type of anchors may save the manufacturing and/or preassembling cost for the support structure. The ground 100 may be a soil ground, sand ground, pebble stone ground, or any other ground, as long as the anchors 113 and 123 may penetrate into the ground or be secured to the ground in other ways. The support structure may be designed to be installed on/in the ground 100 in a position, length, height, and depth that may are suitable for mounting a corresponding set of vertical solar panels in a corresponding environment.

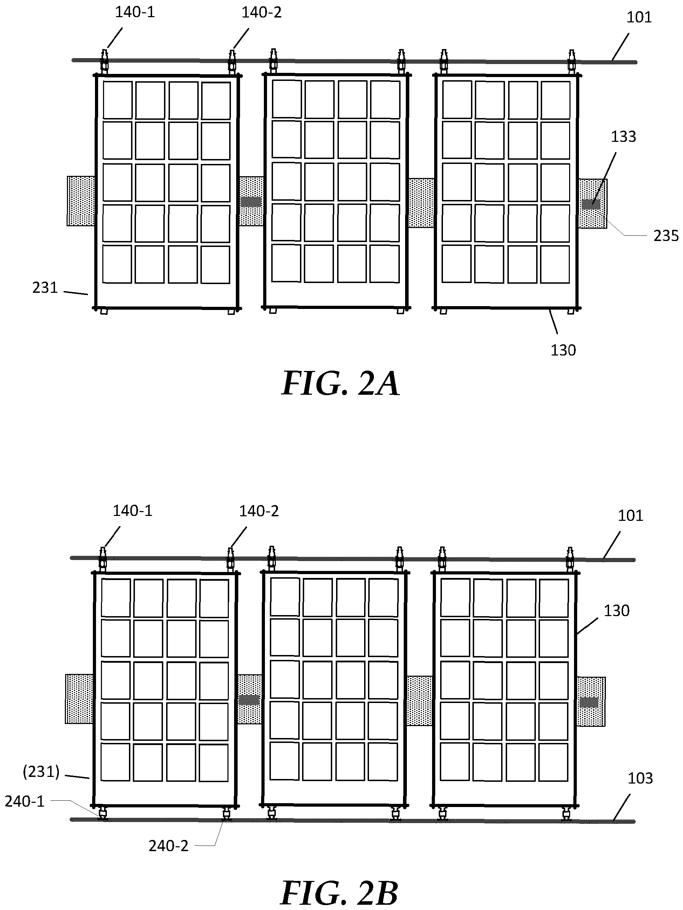

As shown in FIG. 1A and FIG. 1B, the vertical solar panels 130 may be mounted/hung on the cable 101 in a way that working surfaces (e.g., the surfaces with the photovoltaic cells) may be substantially in the same plane as the cable 101. This design may reduce overlapping and blockage of sun light between the solar panels and may also increase usable space between rows of vertical solar panels. Alternatively, the vertical solar panels may be mounted/hung on the cable in a way that working surfaces may not be substantially in the same plane as the cable. The working surfaces of the vertical solar panels may have east and west orientations. Usually the sun rises on the east and falls on the west. The east and west orientation may maximize the amount of sun light reaching the photovoltaic cells of the vertical solar panels. If the sun rises and falls in different directions, for example, southeast and northwest, the orientations of the working surfaces may be adjusted accordingly. The support structure may be installed with an orientation that may lead to desired orientations of the working surfaces. The angles between the vertical solar panels and the support structure may be adjustable. As shown in FIG. 1A, the vertical solar panels 130 may be mounted/hung on the cable 101 via multiple connectors (or cable connectors) 140. Each vertical solar panel 130 may comprise at least two connectors 140 on a top side. The at least two connectors 140 may be detachably attached to the cable 101. The at least two connectors may increase stability of the vertical solar panel and maintain its orientation against for example wind forces. Alternatively, a vertical solar panel may have only one connector. The vertical solar panels 130 may be bifacial solar panels. The vertical solar panels 130 may be connected to each other via spacers 133. The vertical solar panels, connectors, and spacers may be viewed and described in more detail hereinafter with respect to FIG. 2A and FIG. 2B.

FIG. 2A shows an example of vertical solar panels connected to a cable. FIG. 2B shows an example of vertical solar panels connected to two cables. In FIG. 2A, a vertical solar panel 130 or a panel 130 may be connected/mounted to the cable 101 via at least two connectors 140-1, 140-2 located on a top side of the panel 130. The at least two connectors may comprise mounting structures configured to connect to an elongated structure (e.g., cable, wire, rod, etc.). For example, a mounting structure may form an open or closed loop to let the elongated structure pass through. The mounting structure may have a securing mechanism for preventing relative movements between the elongated structure and the mounting structure. The at least two connectors may be attached to the panel 130 by welding, screwing, adhering, etc. The at least two connectors may be integrally formed with the panel 130. The at least two connectors may be detachable from the cable. At least one of the at least two connectors may be adjustable and/or have different working modes. At least one of the at least two connectors may have a damping function against drag and/or rotation forces. The panel 130 may have a free end 231 opposite to the top side. The free end 231 may be designed to not connect to any cable. The free end 231 may allow the panel 130 to swing and/or rotate freely, which may have advantages such as reducing wind shear. At least two panels 130 may be interconnected via at least one spacer 133. A spacer 133 may increase alignment between panels, reduce the amplitude of swinging and/or rotating, and increase stability of a set of panels. Moreover, spacers 133 may help creating a set of panels that may be folded and stacked on top of each other. Such set of panels may be prefabricated (e.g., at a factory), transported to a site, and unfolded for easy deployment. The spacer 133 may be flexible, elastic, and/or bendable. Alternatively, the spacer 133 may be rigid and unbendable. The spacer 133 may be configured to comprise and/or serve as an electric connection point. For example, the spacer 133 may have an electrical box (e.g., junction box) 235. The spacer 133 may incorporate wirings connected to adjacent panels 130. The spacer 133 may include one or more power electronic devices such as optimizer (DC-DC), micro inverter (DC-AC), maximum power point tracker (MMPT), etc. Alternatively, the one or more power electronic devices may be preassembled to the set of solar panels in other ways. For example, a string inverter may be preconnected to the set of panels and disposed alongside them, using mechanisms such as a hook.

In FIG. 2B, a panel 130 may have at least two connectors 240-1, 240-2 located on a bottom side of the panel 130. The at least two connectors 240-1, 240-2 may comprise mounting structures configured to connect to an elongated structure (e.g., cable, wire, rod, etc.). For example, the panel 130 may be connected/mounted to a cable and/or wire 103 via at least two connectors 240-1, 240-2. The wire 103 may be different from the cable 101. For example, the wire 103 may be thinner and/or lighter. The free end 231 as shown in FIG. 2A may become a non-free end in FIG. 2B. The panel 130 may swing/rotate less or not at all, due to at least two contact points at the top (e.g., connectors 140-1, 140-2) and at least two contact points at the bottom (e.g., connectors 240-1, 240-2). This design of at least four contact points may increase positional stability of the panels and minimize the impact from winds, etc.

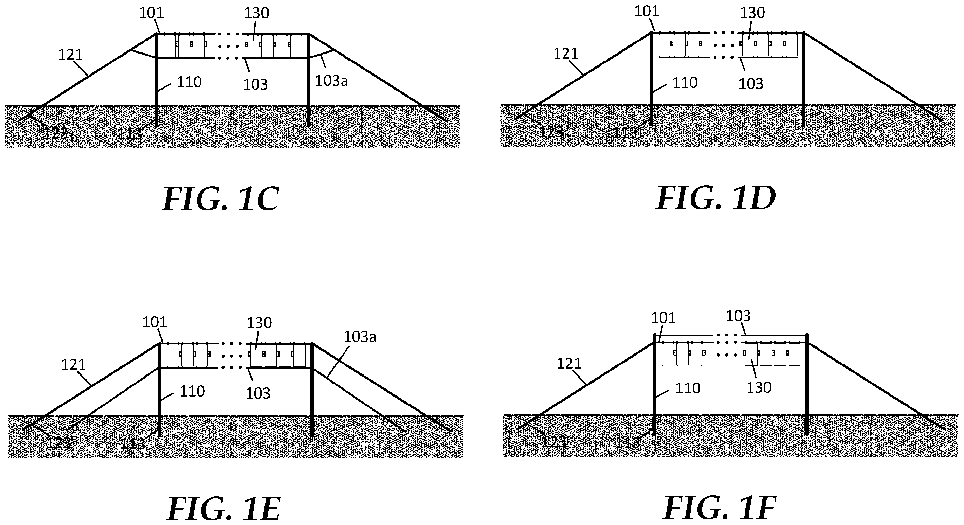

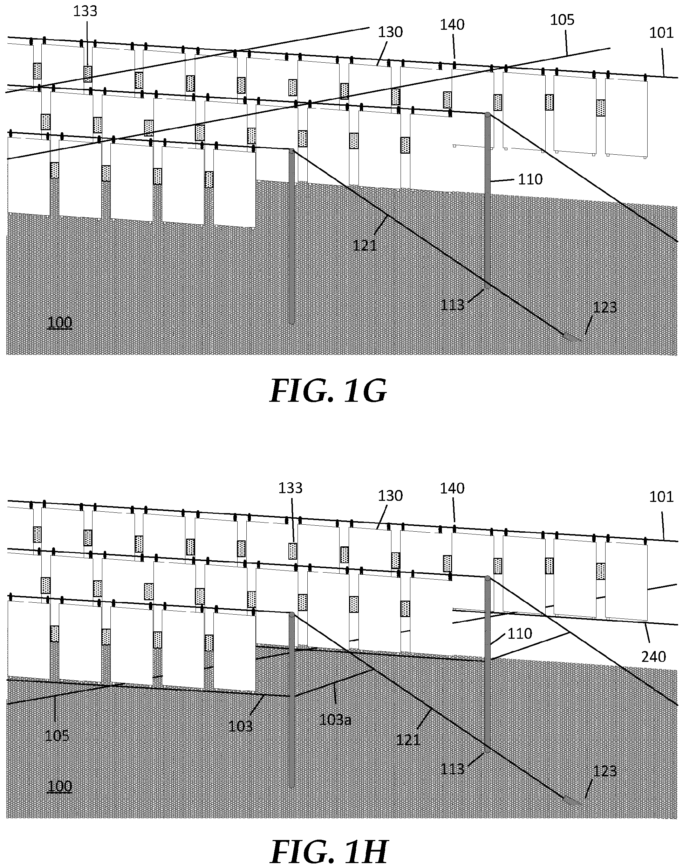

Referring back to FIG. 1C-1H, the vertical solar panels may be connected to additional cables and/or wires besides the hanging cable 101 in different ways, to achieve benefits such as load spreading, etc. FIG. 1C, FIG. 1D, FIG. 1E, and FIG. 1F show examples of variations of an additional cable and/or wire 103 within a row of vertical solar panels. FIG. 1G and FIG. 1H show examples of an additional cable and/or wire 105 across rows of vertical solar panels.

In FIG. 1C, the additional cable and/or wire 103 may connect the panels 130 at the bottom (e.g., via connectors 240-1, 240-2 as shown in FIG. 2B). The wire 103 may be connected to the poles 110. The poles 110 may restrict the position of the wire 103, which may further stabilize the panels against impact from, for example, wind. There may be at least one side wire 103a that may be connected to the anchoring cable 121. FIG. 1C shows two side wires 103a each connecting to an anchoring cable 121. The at least one side wire 103a may be an extension of the wire 103, and/or may be a separate wire that is connected with the wire 103, for example, at the pole(s) 110. The wire 103 and/or the at least one side wire 103a may be connected (e.g., fastened) to the pole 110 and/or to each other, by any mechanism that may apply, for example, a friction structure. The at least one side wire 103a may be connected (e.g., fastened) to the anchoring cable 121 by any mechanism that may apply. The at least one side wire 103a may be connected (e.g., fastened) to the anchoring cable 121 in a way that the wire 103 is stretched and may have an upward tension force. For example, the at least one side wire 103a may extend upwardly towards the anchoring cable 121 from the pole 110. This design may further stabilize the positions of the panels 130, support the weight of the panels 130, and remedy a sagging cable 101.

FIG. 1D is similar to FIG. 1C except for that the additional cable and/or wire 103 is not connected to any pole and there is no side wire. The wire 103 may connect the panels 130 at the bottom (e.g., via connectors 240-1, 240-2 as shown in FIG. 2B). The wire 103 may have some degree of rigidity to control the swing and/or rotation of an individual panel 130 relative to its neighboring panel(s). For example, the rigidity may be controlled by using different tension to the wire and/or by controlling the spacing between the panels. The set of panels as a whole may still have some freedom of movement (e.g., swinging and/or rotating), which may be beneficial in, for example, reducing wind shear.

FIG. 1E is similar to FIG. 1C except for that the at least one side wire 103a may extend downwardly towards the ground from the pole 110. In FIG. 1E, each side wire 103a may be in the form of an anchoring cable which may be connected (e.g., fixed) to the ground. The side wire 103a may be similar to the anchoring cable 121 and may comprise an anchor which may be a helical pile and/or other anchoring structure. The side wire 103a may stretch the wire 103. The side wire may further exert a downward tension force on the wire 103. The downward tension force may stretch the panels 130 between the hanging cable 101 and the wire 103, which may increase positional stability of the panels. The at least one side wire 103a anchored in the ground may increase the load capability and stability of the poles 110 and the entire supporting structure. The at least one side wire 103a may be an extension of the wire 103, and/or may be a separate wire connected to the wire 103. The connection mechanisms between the side wire 103a, the wire 103, and the poles 110 may be any suitable mechanism that may apply. Although not shown, a side wire 103a may extend downwardly from the pole 110 and connect with an anchoring cable 121 instead of the ground. Such side wire 103a may still stretch the wire 103 and/or the panels 130.

In FIG. 1F, the additional cable and/or wire 103 may connect to the poles 110 at top ends of the poles 110. The wire 103 may be located above the set of panels 130 and not connected to the panels 130. The poles 110 may comprise extended top ends, so that the wire 103 may be located at a distance above the panels 130. The wire 103 may prevent one or more panels 130 from completing a full rotation swing around the cable 101.

Although the additional cable and/or wire 103 is shown as one wire in FIG. 1C to FIG. 1F, there may be more than one wire 103. For example, there may be separate wires connecting neighboring two panels. Also, variations of the wire 103 and/or side wire 103a may be used. For example, in FIG. 1F, instead of using a wire to stop the full rotation swing of the panels, other forms of stoppers such as bars or net installed on the extended top ends of the poles 110 may be used.

One or more additional cables and/or wires may be used across rows of vertical solar panels. In the example of FIG. 1G, at least one additional cable and/or wire 105 may connect more than one row of panels from/at the top of the panels, for example, via connectors 140. In the example of FIG. 1H, at least one additional cable and/or wire 105 may connect more than one row of panels from/at the bottom of the panels, for example, via connectors 240. The additional wire 105 may add more cable connection points, which may increase an overall structure stability of a total cluster of panels. FIG. 1H also shows an example of the wire 103 and side wire 103a. A cluster of panels or more than one row of panels may have both the additional cable and/or wire within a row and the additional cable and/or wire across rows. A connector (e.g., the connector 240) may be designed to connect to more than one cable/wire, for example, to allow more than one cable/wire to pass through. Cable(s) and/or wire(s) within a row and cable(s) and/or wire(s) across rows may form a cable system (e.g., mesh) that may promote load reduction via multipole anchoring.

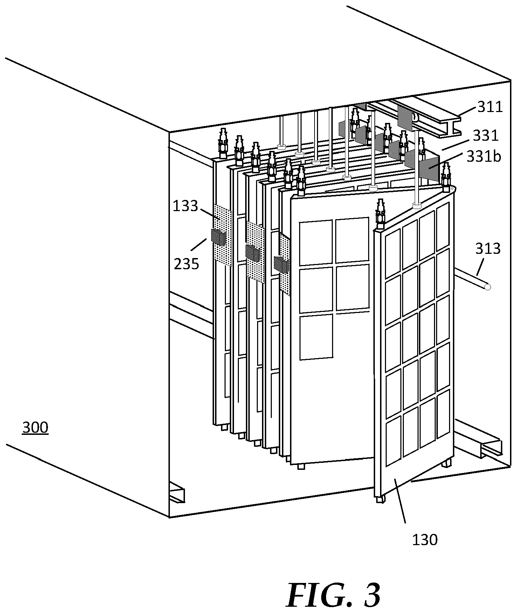

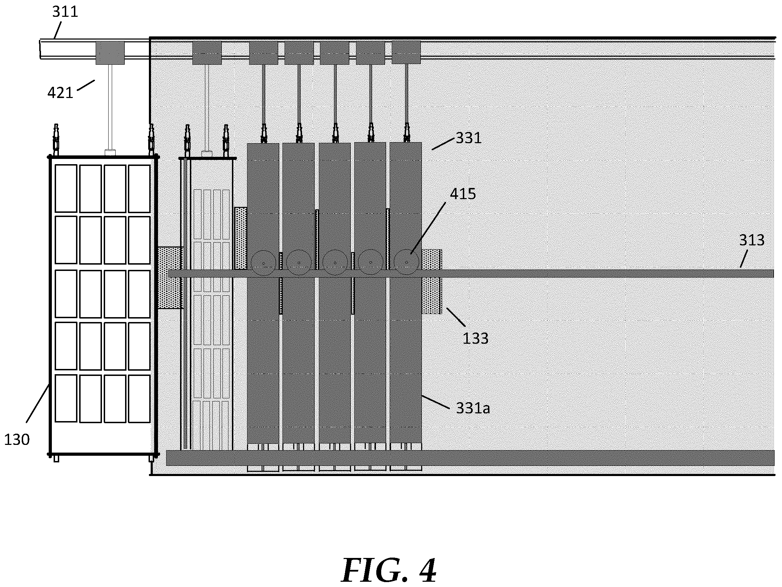

FIG. 3 and FIG. 4 both show an example of a prefabrication. The prefabrication may comprise a set of vertical solar panels in a packaging (e.g., container). The prefabrication and the packaging may be used to ship and/or deploy the panels. A plurality of vertical solar panels 130 (e.g., 47 panels) may be assembled into a set of panels, for example, at a factory or workshop. Each panel may be built with at least one connector as described previously. Each panel may be equipped with electrical components such as optimizer (or inverter, micro-inverter, etc.), wirings, and/or so on. Each panel may further comprise additional components such as batteries, based on additional functions of the panel. The plurality of panels may be interconnected via a connecting member such as a spacer 133 and form a set of panels. The set of panels may be folded at the spacers, with one panel stacked on top of another panel. The spacer 133 may incorporate at least part of the electrical components, for example, in the electrical box 235. The set of panels may be further assembled to a packaging (e.g., container) 300. The packaging 300 may have a plurality of walls to form a space that may contain the set of panels. The packaging 300 may have at least one opening that may allow the panels to enter and/or exit the packaging through the opening. For example, the packaging 300 may be of a rectangular shape, with at least one side open (e.g., having no wall). The packaging 300 may be light-weighted for easy transportation and lifting. The packaging 300 may comprise mechanisms to connect to the set of panels so that the panels may be movable relative to the packaging in a guided way. For example, the packaging 300 may comprise a first guiding member such as a rail 311. The first guiding member (e.g., rail 311) may be located on a side wall and/or near a ceiling of the packaging 300. The set of panels 130 may comprise a plurality of first link members such as hanger assemblies 421. For example, each panel may comprise a hanger assembly 421 connected to the top end of the panel. The first link member (e.g., hanger assembly 421) may be placed on/inside the first guiding member (e.g., rail 311) and may be movable along the first guiding member. For example, the first link member (e.g., hanger assembly 421) may comprise a rod-like part connected to the top end of a panel, an intermediate part (e.g., a L-shaped plate) connected to the rod-like part, and a slidable and/or rotatable part (e.g., a roller) connected to the intermediate part and movably connected to the first guiding member (e.g., rail 311). The packaging 300 may comprise a second guiding member such as a bar 313. The second guiding member (e.g., bar 313) may be located on a side wall and/or at around a middle height of the packaging 300. The set of panels 130 may comprise (e.g., be attached to) a plurality of second link members such as a set of separators 331. Each separator 331 may comprise an elongated part 331a and at least one pair of protruding parts 331b. The elongated part 331a may be configured to attach to a vertical side of each panel. The at least one pair of protruding parts 331b may extend from the elongated part 331a and may be configured to position a top and/or bottom corner of a panel in-between. The second link member (e.g., separator 331) may further comprise a slidable and/or rotatable part (e.g., a roller) 415 that may be configured to be movably connected to the second guiding member (e.g., bar 313). With the first guiding member and the first link member, and/or with the second guiding member and the second link member, the set of panels 130 may move along and/or in/out of the packaging 300 easily and in a controlled way.

The packaging may be of any other shape and/or may have any other number, shape, and/or size of openings, as long as the packaging may realize the functions of receiving, storing, and/or deploying the set of panels. The packaging and/or the set of panels may have any number and/or any kind of mechanisms for movably connecting the packaging with the set of panels, as needed. The packaging may comprise additional structures as needed. For example, the packaging may comprise a structure for securing the packaging to a supporting structure (e.g., a pole). The packaging may comprise an elevation mechanism for positioning the packaging at a desired elevated position (e.g., height) for deployment. The packaging may comprise at least one actuating mechanism configured to move the set of panels. The packaging may comprise a control system that may operate with the at least one actuating mechanism to move the set of panels automatically and/or in a controlled way. The packaging may comprise at least one door and/or cover to close the at least one opening, for secure transportation and/or storage of the set of panels. The packaging may be collapsible, with or without the set of panels, for saving space. The packaging may comprise sensors (e.g., positional sensors) to be used for precise deployment of the set of panels. For example, a positional sensor may detect if the rail 311 is aligned with the pole 110 and/or cable 101 of the support structure. The packaging may comprise accessory devices such as lights for illumination purposes, and/or so on.

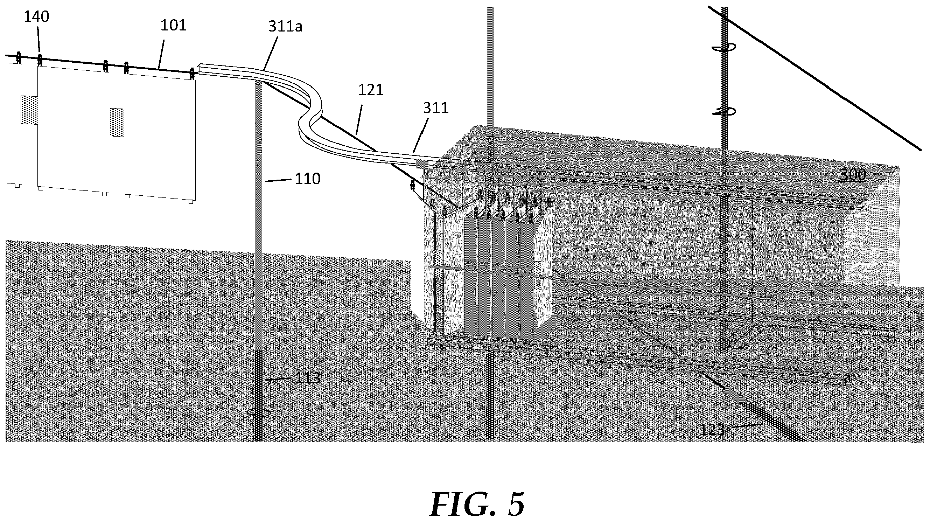

FIG. 5 shows an example of deploying a prefabrication to a support structure. The set of vertical solar panels may be prefabricated and preassembled with the packaging. The packaging with the set of panels may be transported to an installation site (e.g., an agricultural field) for deploying and installing the panels. Alternatively, the prefabricated solar panels and the packaging may be assembled on site. The support structure as previously described with respect to FIG. 1A and FIG. 1B may be transported to the installation site as a preassembled set. For example, two poles 110 may be connected with the cable 101 and two cables 121. The length of cable between the two poles may be set as a predetermined length based on needs at the installation site, and/or may be adjustable. Alternatively, components of the support structure may be assembled on site. By prefabricating the set of panels and preassembling the panels with the packaging, deployment and installation of the panels at the installation site may become simpler, easier, and faster, which may save labor, time, and cost. For example, the panels and packaging may even be preassembled with the support structure, which may further reduce the number of steps for installing the panels.

An example process of deploying and installing the vertical solar panels may be described herein. A support structure may be assembled, set up and secured to the ground at a predetermined position and with a predetermined dimension (e.g., length, height). For example, the cable 101 may be mounted on the two poles 110. The length and/or tension of the cable 101 on the poles 110 may be adjusted. The cables 121 may also be mounted on the two poles 110. The two poles 110 may be erected and may be inserted into the ground, either manually or with the help of a tool and/or machine. For example, each pole may be inserted and driven into the ground via rotational and/or spiral movements. The anchor 113 at an end of the pole 110 may comprise, for example, helical blades that may cut through the ground. Each pole may stop movement when a predetermined depth/height has been reached. Such depth/height may satisfy requirements for both the dimension and the strength of the support structure. Each cable 121 may be stretched to a predetermined position and at a predetermined angle and/or orientation. Each cable 121 may be inserted and driven into the ground, for example, via rotational and/or spiral movements. The anchor 123 at an end of the cable 121 may comprise, for example, helical blades that may cut through the ground. Each cable may stop movement when a predetermined tension has been reached. Such tension may satisfy requirement for the strength of the support structure. In a situation where the cable 121 may be the same as (e.g., an extension of) the cable 101, the cable 121 may also be used to adjust the tension of the cable 101.

The packaging 300 with a set of panels may be elevated to a height corresponding to the height of the cable 101 to allow easier hanging position, either manually or with the help of a tool and/or machine. For example, a truck may serve as both transportation and lifting tools for the packaging 300. For another example, the packaging 300 may be attachable to at least one additional pole. The packaging 300 may be lifted and held by erecting the at least one additional pole and driving the pole into the ground, if the pole is attached to the packaging. In a situation where the packaging 300 with a set of panels may be preassembled with the support structure. The step of lifting the packaging may be eliminated. At a predetermined height, the packaging 300 may be aligned to one of the poles 110 via the first guiding member, for example, rail 311. The first guiding member (e.g., rail) 311 may have an extended portion 311a that may extend outward from the packaging 300. The extended portion 311a may be in a curved shape (e.g., a substantially S shape) that has a linear shaped (e.g., straight) end to be aligned to the cable 101. The shape and/or position of the first guiding member (e.g., rail) 311 may be designed to satisfy the needs for space, position, and/or weight balance. For example, the extended portion 311a may be in an S shape to get more distance, so that more panels may be out of the packaging (e.g., container) and may become parallel to the cable 101 when approaching the cable 101. The first guiding member (e.g., rail) 311, specifically the extended portion 311a, may be placed on top of the pole 110 and/or secured to the top of the pole 110, as needed. When and/or after the first guiding member (e.g., rail) 311 is aligned to the cable 101 and attached to the pole 110, the packaging 300 may be ready to deploy the set of panels to the support structure. The set of panels may be moved on/along the first guiding member (e.g., rail) 311 towards the support structure, for example, the pole 110 and the cable 101. The set of panels may be moved manually or with the help of a tool (e.g., an actuating mechanism). For example, among the set of panels, a panel closest to the pole 110 may be moved (e.g., pulled and/or pushed) towards the pole 110. The movement of this panel may unfold the set of panels which may be originally folded in the packaging 300. The movement of this panel may also move (e.g., drag, pull, etc.) the other panels in the same set. Alternatively, a panel farthest from the pole 110 may be moved (e.g., pushed) towards the pole 110. Alternatively, the movement may start from any panel among the set of panels. When a panel (e.g., the panel closest to the pole 110) reaches the pole 110, the panel may continue moving on/along the linear shaped (e.g., straight) end of the first guiding member (e.g., rail) 311. During movement on and/or after this linear shaped (e.g., straight) end, the panel may be detached from the first guiding member (e.g., rail) 311 and may be attached/mounted to the cable 101. For example, the panel may be lifted and the connectors 140 may be connected to the cable 101 in a slidable way. The first link member (e.g., hanger assembly) 421 may be configured to be detachable from the first guiding member (e.g., rail) 311 and/or the panel 130. The first link member (e.g., hanger assembly) 421 may be designed to also function as a mechanism for lifting the panel. For example, the rod-like part of the first link member (e.g., hanger assembly) 421 may comprise a telescopic structure or may be a flexible structure such as a rope. The panels may be connected/hung to/on the cable and slid along the cable one by one until the set of panels are all deployed/connected to/on the cable 101. When and/or after the set of panels reach predetermined positions on the cable 101, the panels may be secured on the cable 101, for example, by locking the connectors 140. The connectors 140 may be configured to allow more than one status/mode with respect to the cable 101, for example, connected to the cable, sliding on the cable, and restricting movement on the cable. Details of an example connector 140 may be described later. When and/or after the set of panels are secured on the cable 101 at predetermined positions, the packaging 300 may be detached from the pole 110 and moved away, together with the first guiding member (e.g., rail) 311 and/or other related structures. The packaging 300 may be re-used for transporting and deploying another set of panels. The use of the packaging 300 may eliminate and/or reduce the use of other packages such as carton boxes, which may save cost and reduce waste.

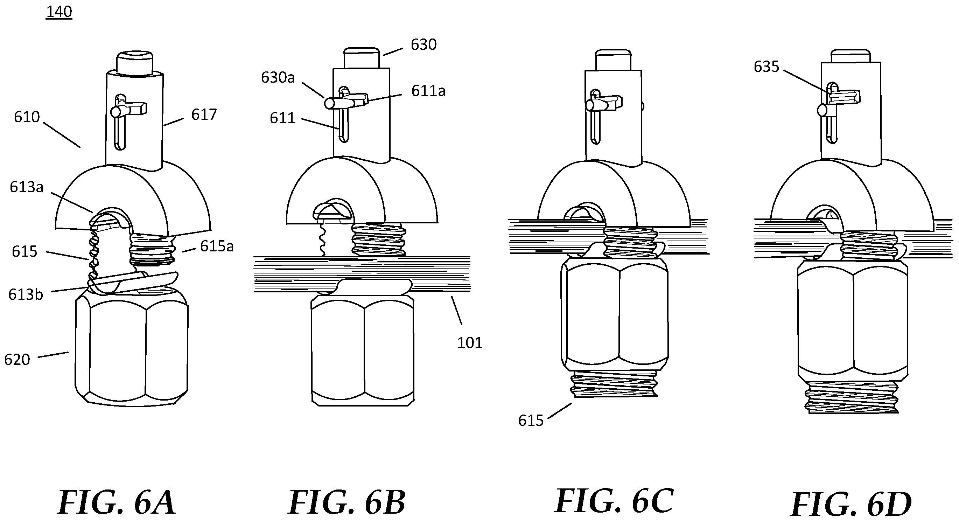

FIG. 6A to FIG. 6D show a main structure and different modes of an example connector. The different modes of the connector may be used for deployment of the solar panels. The main structure of the connector 140 may comprise a male part 610, a female part 620, and a rod part 630. The male part 610 may comprise a male screw 615 and a head portion 617. The male screw 615 may comprise a through hole (e.g., an oval hole) inside (not shown) for connecting with, for example, the panel 130. The male screw 615 may form (e.g., cut in a wall) an opening for a cable to enter or penetrate. As shown in FIG. 6A, part of the opening may be formed below a male screw portion 615a. As a result, the male screw portion 615a may serve as a hook for connecting the connector 140 onto a cable 101. The head portion 617 may be hollow and may comprise a pair of slots 611 in the wall. Each slot 611 may comprise a side slot portion 611a communicating to a main slot portion of the slot 611. The female part 620 may be designed to be movably attached to the male screw 615 of the male part 610. For example, the female part 620 may have an internal thread that may match an external thread of the male screw 615, so that the male screw 615 may be inserted into the female part 620 and may operate in connection with the female part 620. The female part 620 may move up or down in a spiral way with respect to the male screw 615 and may be fastened with the male screw 615. For example, the female part 620 may be in the form of a nut. The rod part 630 may comprise an elongated member (e.g., rod) that may be inserted into the hollow head portion 617, a pair of pins 630a that may penetrate through and slide along the slots 611, and a spring 635 that may be fitted around the elongated member and sit upon the pins 630a. The pair of pins 630a may enter the side slot portions 611a, so that the rod part 630 may not move up or down with respect to the male part 610 and the spring 635 may be in a compressed state. The pair of pins 630a may leave the side slot portions 611a and enter the main slot portions of the slots 611, so that the rod part 630 may move downwardly with respect to the male part 610, for example, under the force exerted by the compressed spring 635.

The connector 140 may further comprise a pair of friction members 613a and 613b. The pair of friction members 613a and 613b may comprise a pair of curved plates. The friction member 613a may be positioned at a correspondingly curved end of the head portion 617. The friction member 613a may be rotatably attached to a lower end of the rod part 630. The friction member 613b may be positioned at an upper end of the female part 620, facing the friction member 613a. The friction member 613b may be rotatably attached to the female part 620. The pair of friction members 613a and 613b may be movable towards each other to form a passage that may have a substantially circular or oval shaped cross section. For example, the friction member 613a may move towards the friction member 613b, if the rod part 630 may move downwardly relative to the head portion 617. The friction member 613b may move towards the friction member 613a, if the female part 620 may move upwardly relative to the male screw 615. Reverse movements may be realized by moving the friction member 613a and/or friction member 613b in an opposite direction. For example, the female part 620 may be moved downwardly relative to the male screw 615, and/or the rod part 630 may be moved upwardly relative to the head portion 617 (e.g., against the exerting force of the spring 635). The pair of pins 630a of the rod part 630 may enter the side slot portions 611a to lock the rod part in position.

Other mechanisms for attaching and/or moving the friction members 613a and 613b may be used. For example, the friction member 613b may be attached to the male part 610 instead to the female part 620. For example, the rod part 630 may use mechanisms (e.g., thread mechanism) other than a spring to move the friction member 613a downwardly. There may be other forms and/or numbers of pin and slot structure. The connector 140 may be operated manually, and/or with the help of a tool. The connector 140 may comprise an electronic actuation system which may control the movements of the male part 610, female part 620, rod part 630, and/or the friction members 613a and 613b.

Among the four figures (a), (b), (c), and (d) of FIG. 6, FIG. 6A and FIG. 6B both show a first mode (e.g., open mode). FIG. 6A shows a connector in the first mode without a cable. FIG. 6B shows a connector in the first mode with a cable. In the first mode (e.g., open mode), the opening or gap between the male screw portion 615a and the female part 620 may allow the cable 101 to pass through the gap and enter a space formed between the friction members 613a and 613b. For example, a panel may have two connectors 140 each in the first mode (e.g., open mode). The panel may be lifted until the gap of each of the connectors 140 face the cable 101. By pushing the connectors towards the cable 101, the cable 101 may enter the gaps, and the connectors may initially hang the panel on the cable. Such operation may be simple, fast, and easy to perform and control.

FIG. 6C shows a second mode (e.g., sliding mode). In the second mode, the head portion 617 of the male part 610 may be closer to the female part 620, compared to the first mode, and there may be no gap between the male screw portion 615a and the female part 620. The second mode may be realized by moving the female part 620 upwardly relative to the male screw 615. The male screw 615 may extend beyond the female part 620. The friction members 613a and 613b may be closer to each other, with the cable 101 in-between. Alternatively, the male screw 615 may be moved downwardly relative to the female part 620. In the second mode, the cable 101 may still move (e.g., slide) between the friction members 613a and 613b. The cable 101 may not leave the connector 140 without operating the connector to the first mode.

FIG. 6D shows a third mode (e.g., lock mode). The third mode may be a further mode after the second mode. In the third mode, the friction members 613a and 613b are closest to each other, providing tension to (e.g., pressing) the cable 101. As described previously, for example, the rod part 630 may move downwardly relative to the head portion 617 to move the friction member 613a towards the friction member 613b, for example, under the force exerted by the compressed spring 635. As a result, the cable 101 may not move between the friction members 613a and 613b, and the third mode (e.g., lock mode) may secure the panel 130 to the cable 101.

Referring back to FIG. 5, in the process of deploying a set of panels to a cable 101, the set of panels may be initially hung on the cable, using a first mode (e.g., open mode) of the connectors 140. The connectors 140 may be set to a second mode (e.g., sliding mode), and the set of panels may be sliding on the cable under the second mode. When and/or after the set of panels may reach predetermined positions on the cable 101, the connectors 140 may be actuated to be in a third mode (e.g., lock mode), so that the set of panels may be securely mounted on the cable. Such deployment and installation system and/or method may be easy to operate, fast, and reliable, thus may greatly save time, labor, and cost.

The set of panels may also be prefabricated and/or preassembled with the cable 101 via the connectors 140, and the different modes of the connectors may be used during the prefabrication and/or preassembling process. The set of panels may be already fixed/locked on the cable 101 at the installation site, and the panels may be deployed simply by mounting the cable 101 on the support structure (e.g., fastening the cable to and/or stretching the cable between two anchored poles). Alternatively, the connectors 140 may be fixed to the cable 101 during the prefabrication and/or preassembling process. And the set of panels may be deployed to the connectors 140 at the installation site.

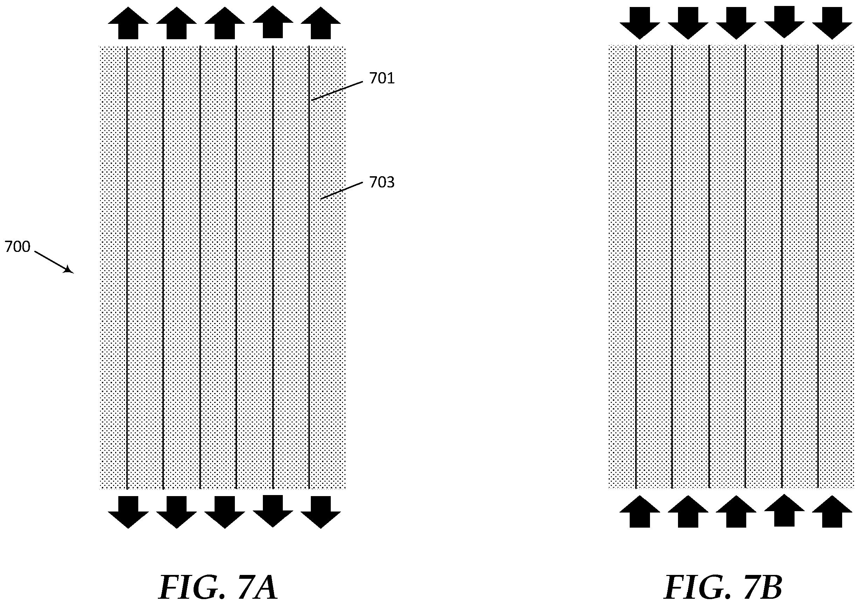

FIG. 7A shows an example of preload for manufacturing a solar panel. FIG. 7B shows an example of afterload for manufacturing a solar panel. As shown in FIG. 7A and FIG. 7B, a solar panel or PV module 700 may comprise a reinforcing structure 701. The reinforcing structure 701 may comprise a plurality of conductors, metallic wires (e.g., steel wires, carbon wires, etc.), cables, matrix, etc. The reinforcing structure 701 may be positioned (e.g., embedded) in the solar panel 700, for example, inside deformable material 703 such as polymer. For example, the reinforcing structure 701 may be positioned inside the polymer in a mold and/or between layers. The reinforcing structure 701 (e.g., steel wires) may reinforce the deformable material (e.g., polymer) 703, and may take gravitational load so that deformation (e.g., "creep") of the deformable material 703 may be reduced or prevented. The reinforcing structure 701 may provide other functions such as electricity conduction, etc.

The reinforcing structure 701 may receive preload (e.g., tensile load) and may provide afterload (e.g., compressive load) for (e.g., during) manufacturing a solar panel. For example, before a lamination or overmold process, the reinforcing structure (e.g., wires) 701 may be subjected to a tensile load or force, as indicated by arrows in FIG. 7A. For example, a machine may be used to pull the wires in opposite directions under a predetermined load. The reinforcing structure (e.g., wires) 701 may be stretched. For example, after the lamination or overmold process, the reinforcing structure (e.g., wires) 701 which has received the preload may provide (e.g., exert) an afterload (e.g., a compressive load, as indicated in FIG. 7B) to the deformable material (e.g., polymer) 703. For example, stretched steel wires may contract, for example, due to elasticity. The contraction may generate a compressive force (e.g., equal to the tensile force) on the deformable material (e.g., polymer) 703. The compressive force may help with preventing or reducing the deformation (e.g., "creep").

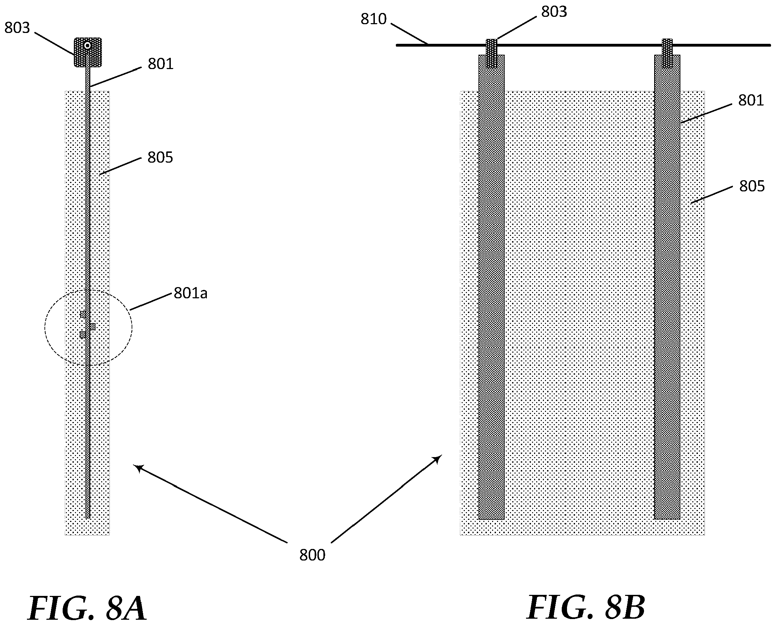

FIG. 8A shows an example cross-sectional side view of a solar panel embedded with a reinforcing structure connected to a cable. FIG. 8B shows an example cross-sectional front view of a solar panel embedded with a reinforcing structure connected to a cable. A solar panel or PV module 800 may be mounted on a hanging structure, for example, a cable 810. Portions of the solar panel 800 that connect to the hanging structure 810 may be subject to tension forces, for example, due to weight under gravity and/or wind loads. If these portions comprise deformable materials such as polymer, deformation or other damages may occur over time. As shown in FIG. 8A and FIG. 8B, a solar panel 800 may comprise a reinforcing structure 801. The reinforcing structure 801 may be positioned between two layers of deformable materials (e.g., polymer) 805. The reinforcing structure 801 may comprise one or more reinforcing components such as bars, ribbons, tabs, etc. These reinforcing components may be made of any suitable materials with strength and stiffness that may support loads without deformation. For example, the materials may comprise metal (e.g., steel), carbon (e.g., carbon fiber), etc. The reinforcing structure 801 may comprise a connection part 803 that connects to the hanging structure (e.g., cable 810). For example, the connection part 803 may comprise a through hole for the cable 810 to pass through. For example, the connection part 803 may comprise a clamp that may be attached to the cable 810. The connection part may comprise any other structure that is suitable for connecting to the hanging structure, for example, a hook, a tape, etc. The connection part 803 may be a separate part that may be assembled with the reinforcing structure 801. The connection part 803 may be part of the reinforcing structure 801. For example, the connection part 803 may be integrally formed with the reinforcing structure 801. The reinforcing structure 801 may connect to the hanging structure (e.g., cable) 810 and may bear the forces so that other portions (e.g., polymer layers 805) of the solar panel 800 may be less impacted by the forces. The reinforcing structure 801 may comprise high surface roughness and/or comprise a plurality of resistance structures (e.g., bumps) 801a. These resistance structures (e.g., bumps) 801a may increase contact surface areas and connections between the reinforcing structure 801 and the deformable materials (e.g., polymer) 805, and may further reinforce the solar panel 800.

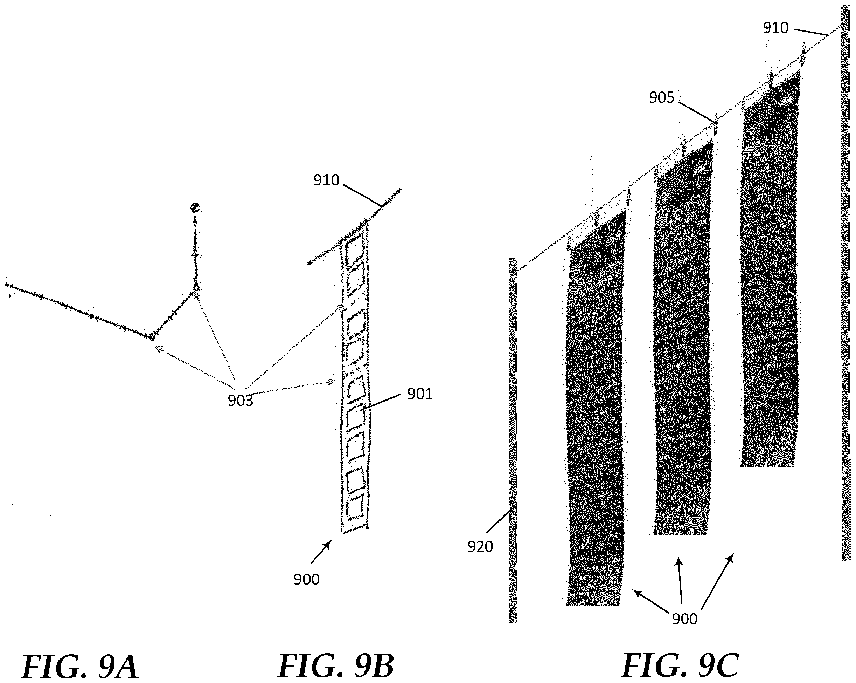

FIG. 9A, FIG. 9B, and FIG. 9C show an example of a hanging solar panel with flexible joints. A hanging solar panel or PV module may be at least partially flexible and may move under wind loads. The capability to move with the wind may reduce tensions at connection points between solar panels and the hanging structure (e.g., cable), compared to completely rigid and/or fixed hanging solar panels. Excessive movement may cause problems. For example, a solar panel (e.g., especially a long and thin one) may be rotated excessively (e.g., at or close to 180 degrees, 360 degrees, etc.) or flipped over by a wind. The excessive rotation may cause collision (e.g., clash) between different solar panels and/or different parts of a same solar panel. Damage to the solar panels may occur, and stability in the performance of the solar panels may deteriorate.

An impact of wind loads on hanging solar panels may be managed, for example, by providing controllable joints and spaces to control swing form and range. For example, in FIG. 9A, FIG. 9B, and FIG. 9C, one or more solar panels 900 may be mounted on a hanging structure (e.g., cable) 910 which may be installed on (e.g., stretched between) two ground supports (e.g., poles) 920. Each solar panels 900 may be mounted on the hanging structure 910 via one or more connection parts 905. Each solar panel 900 may comprise multiple PV cells 901. The PV cells 901 may be arranged in a vertical direction with gaps, and the solar panel 900 may form an elongated shape (e.g., as shown in FIG. 9B). The solar panel 900 may comprise one or more flexible joints 903. The flexible joint 903 may be positioned at a selected gap between two PV cells 901. The flexible joint 903 may be configured to have a limited range of rotation. For example, one flexible joint 903 may be configured to have a maximum rotation angle of 45 degrees, and another flexible joint 903 may be configured to have a maximum rotation angle of 60 degrees. Special joints that have rotation range limits may be used. Other structural designs (e.g., raised edges on neighboring cell groups) or components (e.g., a damping mechanism) may be used to put limit to rotation angles. More than one flexible joint 903 in a same solar panel 900 may be configured to have a same maximum rotation angle or different maximum rotation angles. The quantity, location, and/or rotation angle or range, etc. of the flexible joint 903 in a solar panel 900 may be designed, for example, based on properties (e.g., dimensions, shape, weight, etc.) of the solar panel and/or wind conditions in a location where the solar panel may be deployed. For example, in a mountainous area with strong winds, a hanging solar panel with a medium weight (e.g., 40 pounds or 18 kilograms) may have a relatively high possibility of being excessively rotated under wind loads. For example, the solar panel 900 may have an elongated shape with multiple (e.g., nine) PV cells 901 evenly distributed in a vertical direction, as shown in FIG. 9B. For example, one flexible joint 903 may be located in a substantially middle position in the vertical direction (e.g., in a gap between a group of four PV cells and a group of five PV cells). Another flexible joint 903 may be located in a substantially middle position in a top half of the solar panel 900 (e.g., separating the group of four PV cells into two groups of two PV cells). Rotation ranges for these flexible joints 903 may be determined, for example, based on lengths of each part (e.g., PV cell group) of the solar panel 900 as separated by the flexible joints 903. For example, the rotation ranges (e.g., maximum rotation angles) may be determined in a way that a lower part may not collide (e.g., clash) with a higher part at its highest position. FIG. 9A shows an example swing form of the solar panel 900 of FIG. 9B at its highest position under wind loads (e.g., from right to left in FIG. 9A). At the highest position of the swing form of the solar panel 900, no part of the solar panel 900 may rotate excessively, and stability may be reached. The solar panel 900 may withstand higher wind loads without the risk of causing damages.

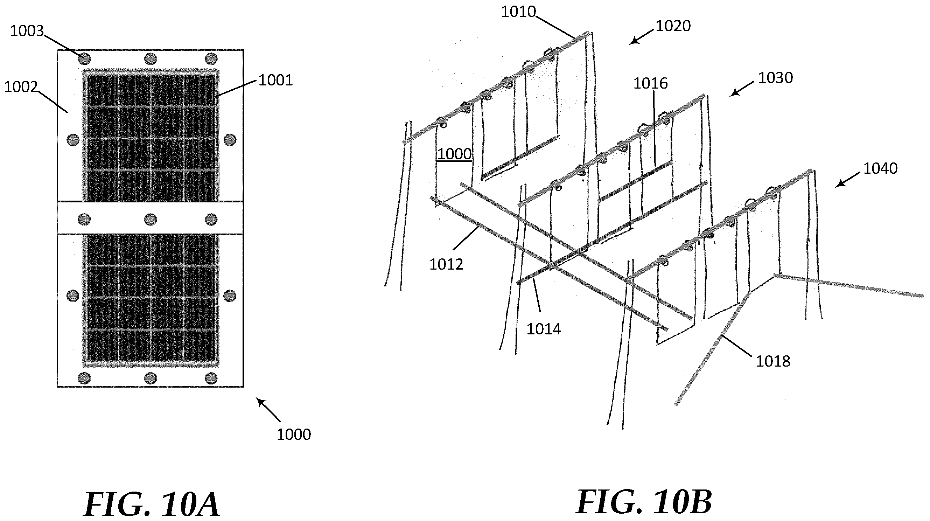

FIG. 10A shows an example of holes in a solar panel. FIG. 10B shows an example of connection variations for solar panels using selected holes. A solar panel or PV module may comprise holes at selected locations for connectivity, mounting, and/or load management. In some applications such as farmlands, the holes may also be used for shade management.

In FIG. 10A, a solar panel 1000 may comprise one or more holes 1003 in one or more edge portions 1002. The edge portions 1002 may comprise portions of the solar panel 1000 that are located outside and/or between PV cells 1001. The edge portions 1002 may be located at the edges (e.g., top, bottom, side, perimeter) of the solar panel 1000. The edge portions 1002 may be located at a middle portion (e.g., between two groups of PV cells 1001) of the solar panel 1000. The edge portions 1002 may comprise deformable materials such as polymer. The holes 1003 may be located in selected edge portions 1002. The quantity, size, location, shape of the holes may be selected (e.g., customized) to achieve desired mounting, load management, and/or local rigidity for the solar panel 1000. For example, in FIG. 10B, solar panels 1000 of the same row may be connected to each other. For example, in each row (e.g., row 1020, row 1030, or row 1040), a plurality of solar panels 1000 may be mounted on a hanging structure (e.g., cable) 1010 at the top of each solar panel. For example, each solar panel 1000 may comprise holes 1003 at an edge portion 1002 at the top, as shown in FIG. 10A. These holes 1003 may be connected to the cable 1010. For example, two or more solar panels 1000 in the same row may be connected with each other at the bottom (e.g., using wire 1014) and/or in the middle (e.g., using wire 1016). These wires may be connected with holes 1003 at an edge portion 1002 at the bottom or in the middle. The solar panels 1000 in the same row may be connected with each other at any other locations, and locations of holes 1003 may be selected accordingly. Connecting two or more solar panels 1000 in the same row may increase stability of the solar panels, for example, against winds. As indicated in FIG. 10B, solar panels 1000 from different rows may be connected to each other. For example, any two or all three of the rows 1020, 1030, and 1040 may be connected to each other (e.g., using wire 1012). For example, the wire 1012 may be connected to the holes 1003 at an edge portion 1002 at the bottom. Solar panels 1000 from different rows may be connected to each other at any other locations (e.g., at the top, in the middle, etc.). Locations of holes 1003 may be selected accordingly. Connecting solar panels 1000 from two or more rows (e.g., parallel rows) may increase stability of the solar panels and/or the rows. For another example, a solar panel 1000 may be anchored to the ground and/or other objects, for example, using wires 1018. The holes 1003 may apply to any solar panels, including vertical, horizontal, tilted solar panels. Solar panels 1000 in a same row may be prefabricated with holes 1003 and stacked and/or rolled into a single assembly for fast deployment. For example, the assembly may include cables and/or wires already assembled with the holes 1003.

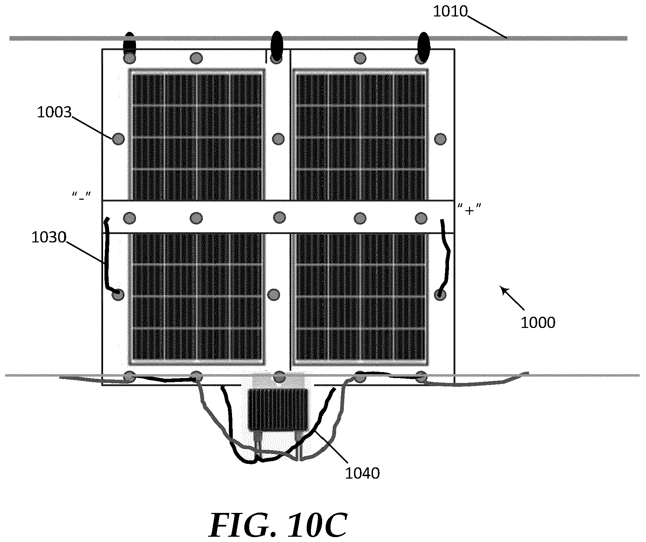

FIG. 10C shows an example of connections between solar panels and power electronic devices (e.g., optimizers) using selected holes. One or more power electronic devices 1040 such as optimizer (DC-DC), micro inverter (DC-AC), maximum power point tracker (MPPT), power harvesting module, safety module, bypass module, etc. may be connected (e.g., attached, mounted, installed, etc.) to solar panels 1000. Holes 1003 in the solar panels 1000 may be used for managing electrical wirings (e.g., wiring 1030). For example, electrical wirings (e.g., DC wirings) may pass through selected holes so that cluttering may be avoided or reduced. The holes 1003 may be used to connect the one or more power electronic devices (e.g., optimizers) 1040 to the solar panels 1000. For example, the holes 1003 may be used for optimizer outputs, DC homerun, grounding wires, etc. The solar panels 1000 may be preassembled with the wirings 1030 and/or the power electronic devices (e.g., optimizers) 1040, so that easy deployment may be achieved.

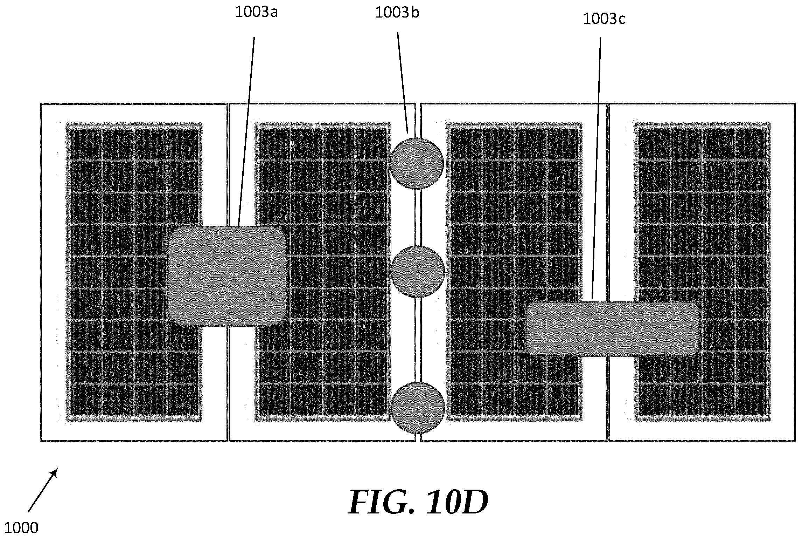

FIG. 10D shows an example of larger holes in solar panels. Solar panels 1000 may be provided with bigger or larger holes 1003 (e.g., 1003a, 1003b, 1003c) for wind management. Larger holes may have more impact on weight distribution and wind loads. Different dimensions and geometry, different locations may be designed for larger holes. For example, in FIG. 10D, there may be a hole 1003a at a middle position between two solar panels 1000. The hole 1003a may have a substantially square shape. There may be three holes 1003b evenly distributed in a vertical direction between two solar panels 1000. Each hole 1003b may be of a round shape. There may be a hole 1003c at a lower position between two solar panels 1000. The hole 1003c may have a horizontally elongated rectangular shape. These holes may affect performance of solar panels 1000 in the winds, individually and/or as a whole.

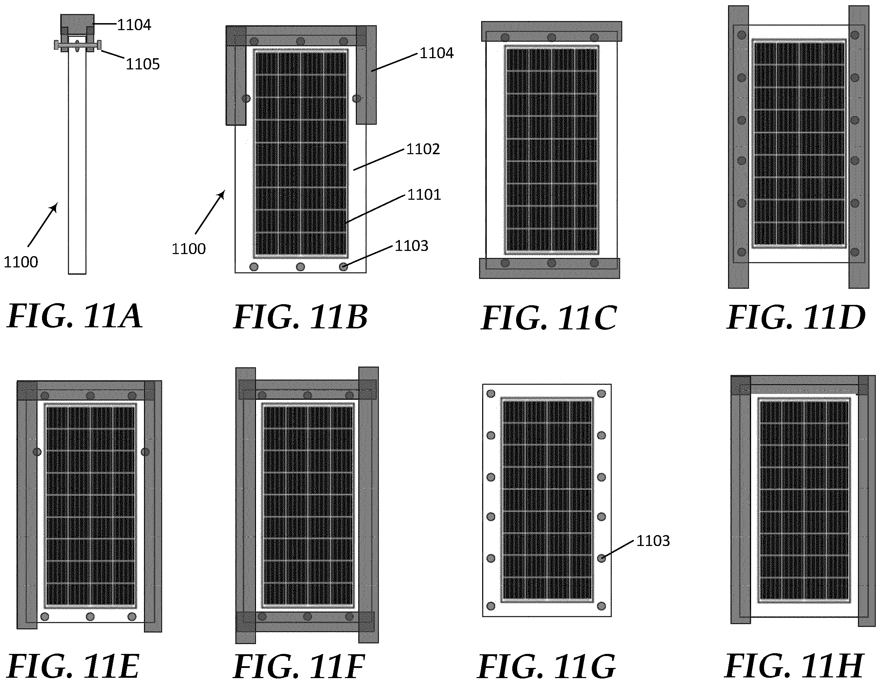

FIG. 11A to FIG. 11H show examples of one or more frames connected to a solar panel with or without holes. A solar panel or PV module 1100 may be provided (e.g., installed) with one or more frames 1104. The one or more frames may at least partially cover one or more edge portions 1102 of the solar panel 1100. At least a portion of the solar panel 1100 (e.g., the edge portions 1102) may comprise deformable materials such as polymer. For a hanging panel, the polymer may stretch, bend, etc. over time. The one or more frames 1104 may be used to strengthen, protect from and handle wind forces and/or gravitational forces applied on the full panel/module, cells, arrays, substrings, and their electrical connections, and mechanical durability may be improved. The frames 1104 may also facilitate connection of the solar panel 1100 to hanging structures (e.g. cable, not shown). The one or more frames 1104 may be of any quantity, location, shape, etc. For example, the frames 1104 may be a top frame and a bottom frame (e.g., FIG. 11C). The frames 1104 may be side frames (e.g., FIG. 11D). The frames 1104 may be on full perimeter (e.g., all four edge portions 1102, surrounding PV cells 1101) (e.g., FIG. 11F). The frames 1104 may be on three edge portions 1102, forming a reversed U shape (e.g., FIG. 11B, FIG. 11E, and FIG. 11H). The frames 1104 may be connected to the solar panel 1100 through any means. For example, one or more connection components 1105 such as screws, U-bolts, rings, rivets, springs, etc. may be used to attach the frames 1104 to the solar panel 1100. For example, the connection components 1105 may utilize one or more holes 1103 (as described above, and FIG. 11G shows an example of holes 1103) in the solar panel 1100. For example, adhesive may be applied between the frames 1104 and the edge portions 1102. For example, the frames 1104 may be attached to the solar panel 1100 by press, pinching, etc.

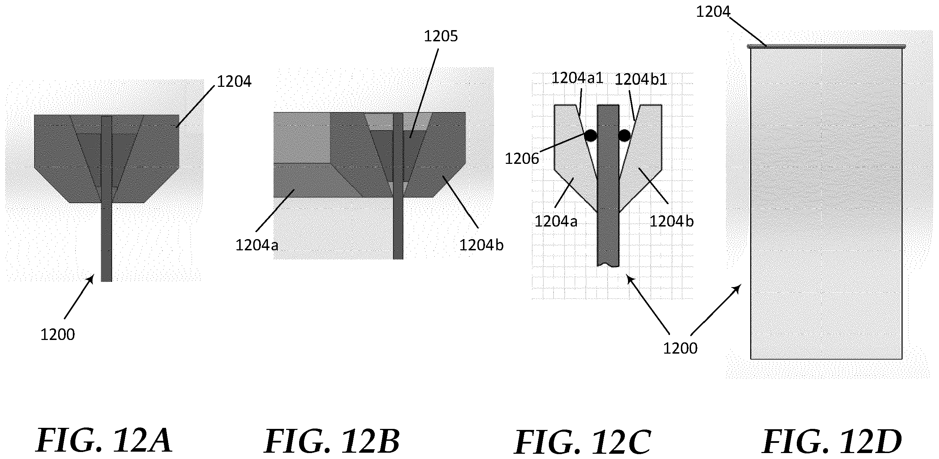

FIG. 12A to FIG. 12D show an example of a frame mounted to a solar panel. One or more frames 1204 may be mounted on a solar panel 1200 (e.g., at an edge portion) by press. For example, a frame 1204 may comprise two parts 1204a and 1204b. The two parts 1204a and 1204b may be positioned on opposite sides of the solar panel 1200, as shown in FIG. 12A, FIG. 12B, and FIG. 12C. The two parts 1204a and 1204b may press the solar panel 1200 (e.g., polymer) in-between. The frame 1204 may operate with other components. For example, a top edge portion of the solar panel 1200 may be provided with a self-weight lock 1205. The self-weight lock 1205 may be connected to the top edge portion of the solar panel 1200 and may move with the solar panel 1200. Alternatively, the self-weight lock 1205 may be integrally formed with the solar panel 1200. The self-weight lock 1205 may have slope side surfaces (as indicate in FIG. 12B) which may work with the two parts 1204a and 1204b which have corresponding slope surfaces. As the solar panel 1200 moves downwardly due to weight, the self-weight lock 1205 may fit between the two parts 1204a and 1204b, and the downward movement of the solar panel 1200 may stop. The slope surfaces may be steeper, for example, if the solar panel 1200 may shrink less. If the solar panels 1200 shrinks more, the slope surfaces may be less steep so that locking may be more reliable. The self-weight lock 1205 may take other forms, for example, rods as indicated in FIG. 12C. For example, in FIG. 12C, the self-weight lock 1205 may take the form of a pair of rods 1206 that may be connected to and/or integrally formed with the solar panel 1200. Each rod 1206 may have a substantially fixed width (e.g., diameter) so that the rod 1206 may fit at a certain height in relation to the two parts 1204a and 1204b, without moving further downwardly along inner side surfaces 1204a1 and 1204b1 of the two parts 1204a and 1204b. The inner side surfaces 1204a1 and 1204b1 may be inwardly tapered or sloped, as indicated in FIG. 12C. The rods 1206 may be of any length, shape, location, and/or material, as long as the rods may enable the solar panel 1200 to fit (e.g., sit, lock) in the frame 1204 (e.g., two parts 1204a and 1204b) under gravitational forces. For example, the rods 1206 may be made of elastic materials (e.g., spring). The self-weight lock 1205 may be of any other form, material, etc., as long as the lock may enable the solar panel 1200 to be locked under self-weight and/or friction. For example, the self-weight lock 1205 may comprise a pair of hooks. The frame 1204 (e.g., two parts 1204a and 1204b) may comprise any structures that may operate with the self-weight lock 1205. For example, the two parts 1204a and 1204b may comprise steps that may support corresponding structures (e.g., the rods 1206) of the self-weight lock 1205. For example, the frame 1204 may have more than two parts. FIG. 12D shows a front view of the solar panel 1200 hung from the frame 1204. The self-weight lock 1205 etc. may be hidden by the frame 1204 in the front view, which may improve the appearance of the hanging solar panel.

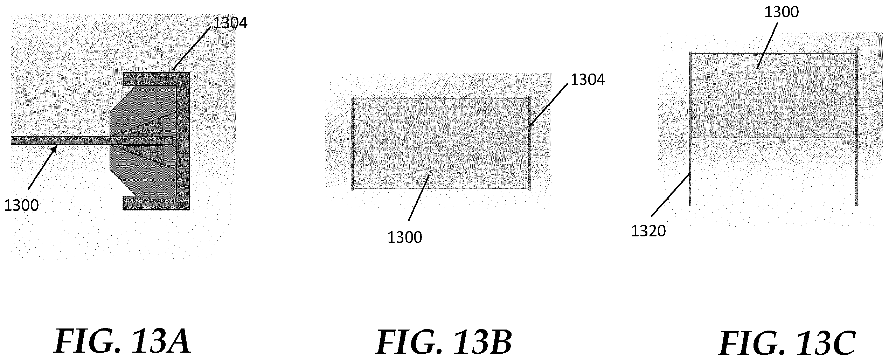

FIG. 13A, FIG. 13B, and FIG. 13C show an example of mounting solar panels from two sides. For example, two frames 1304 may be used to press a solar panel 1300 or a group of interconnected solar panels 1300 from two sides. As shown in FIG. 13A, a frame 1304 may comprise internal structures that may hold and press the solar panel 1300. The internal structures may be similar to, for example, that in FIG. 12A. The frame (e.g., each of the frames) 1304 may be connected to a supporting structure (e.g., pole) 1320, as shown in FIG. 13C. By mounting the solar panel 1300 between supporting structures 1320 on both sides, more solar panels 1300 may be connected in-between.

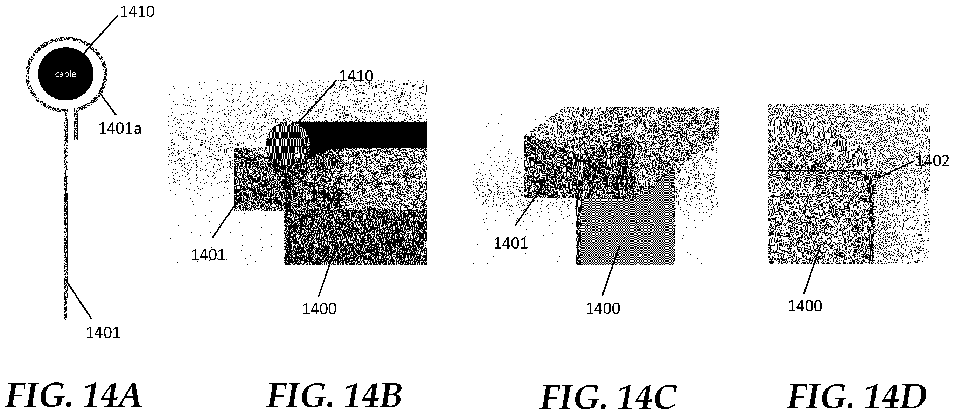

FIG. 14A to FIG. 14D show examples of different frames for a solar panel. A solar panel or PV module 1400 may be provided with different frames to facilitate mounting the solar panel to a hanging structure such as a cable 1410. For example, a frame 1401 may form one or more hook-like connectors 1401a that may elastically lock (e.g., snap) onto the cable 1410, as indicated in FIG. 14A. The frame 1401 may be attached to the solar panel 1400. The frame 1401 and the connectors 1401a may be integrally formed with the solar panel 1400, for example, formed (e.g., overmolded) with polymer. For another example, as indicated in FIG. 14B, FIG. 14C, and FIG. 14D, a frame 1401 and/or a top portion 1402 of the solar panel 1400 may be formed with contoured surfaces (e.g., curved surfaces or edges) to support and/or fit the hanging structure such as the cable 1410. For example, the top portion 1402 may comprise a shape (e.g., concaved) that may fit a lower contour of the cable 1410. Matching contours of contact surfaces as described herein may improve speed and stability of installation, and reduce additional components, etc.

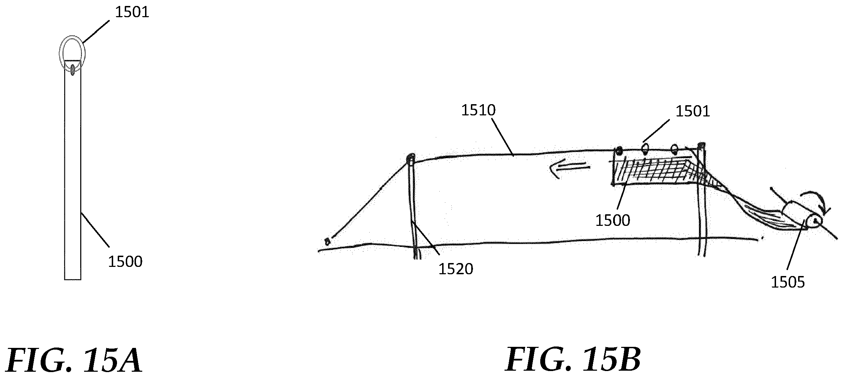

FIG. 15A and FIG. 15B show an example of fast deployment for solar panels. Solar panels 1500 may be flexible and may be interconnected to a desired length (e.g., 30 meters, 100 meters, etc.). The solar panels 1500 may be rolled (e.g., pre-rolled) around a core 1505, as indicated by FIG. 15B. The solar panels 1500 may be configured to connect to a hanging structure (e.g., cable) 1510, for example, via connection components 1501 such as rings, U-bolts, etc. For example, these connection components 1501 may be preassembled and/or integrally formed with the solar panels 1500. For example, these connection components 1501 may be preassembled and/or integrally formed with the hanging structure (e.g., cable) 1510. The preassembled and/or pre-rolled solar panels 1500 may be transported to an installation site and fast deployed to the hanging structure (e.g., cable) 1510. For example, a machine (e.g., a truck, a specially designed equipment, etc.) may carry the solar panels 1500 and move along the hanging structure (e.g., cable) 1510 to deploy the solar panels 1500.

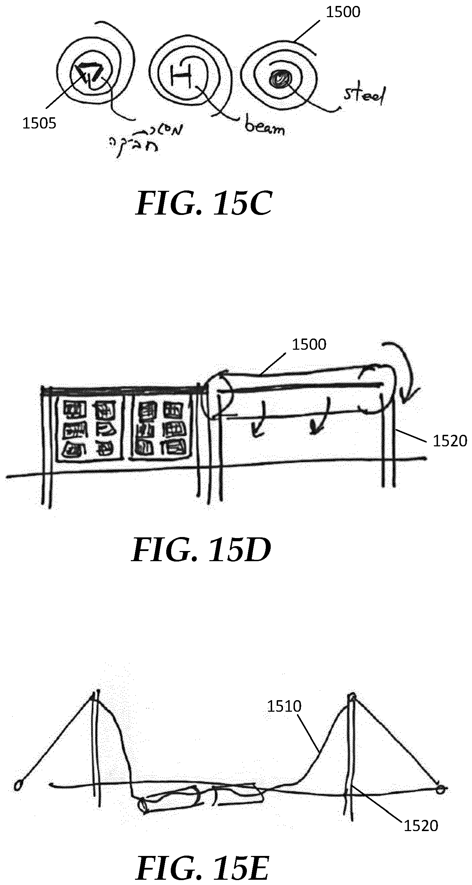

FIG. 15C shows examples of pre-rolled solar panels on selected cores. FIG. 15D shows an example of fast deployment for solar panels. FIG. 15E shows another example of fast deployment for solar panels. Solar panels (e.g., flexible solar panels) 1500 may be pre-rolled on/around a core 1505. The core 1505 may be selected to have any shapes, sizes, materials, structures, etc. For example, the core 1505 may comprise different cross sectional shapes. FIG. 15C shows a few examples of different cores 1505 for solar panels 1500. For example, the core 1505 may comprise a beam that may have a cross sectional shape of triangle, letter H, or circle, etc. For example, the core 1505 may comprise a pole made of steel. The core 1505 may have structures (e.g., shapes, connection joints) that may be configured to be part of mounting structures for the solar panels 1500. For example, the core 1505 may comprise any of the mounting structures as described with respect to FIGS. 12A-12D, FIGS. 13A-13C, and/or FIGS. 14A-14D. For example, the core 1505 may be part of an installation rack that may comprise two poles or piles 1520 (e.g., as shown in FIG. 15D). For example, the core 1505 may comprise a beam that is configured to be positioned and connected on top of the two poles 1520. For example, the solar panels 1500 pre-rolled on the core 1505 may unroll (e.g., drop), if the core 1505 is connected to the poles 1520. Fast deployment may be achieved. Alternatively or additionally, the core 1505 may be designed to connect to a hanging structure (e.g., cable) 1510. For example, as shown in FIG. 15E, the hanging structure (e.g., cable) 1510 may pass through the solar panels 1500 pre-rolled on the core 1505, for example, when the cable is not in tension (e.g., when the solar panels 1500 are on the ground). For example, the pre-rolled solar panels 1500 may be prefabricated or preassembled with the hanging structure (e.g., cable) 1510. The hanging structure (e.g., cable) 1510 may be set (e.g., pulled, stretched) with predetermined tension, for example, between the poles 1520. The pre-rolled solar panels 1500 may be opened (e.g., triggered to unroll, etc.), for example, after the hanging structure (e.g., cable) 1510 is stretched. The solar panels 1500 may be flexible and the roll may be lightweight, which may make deployment easy without risks of damaging the solar panels etc.

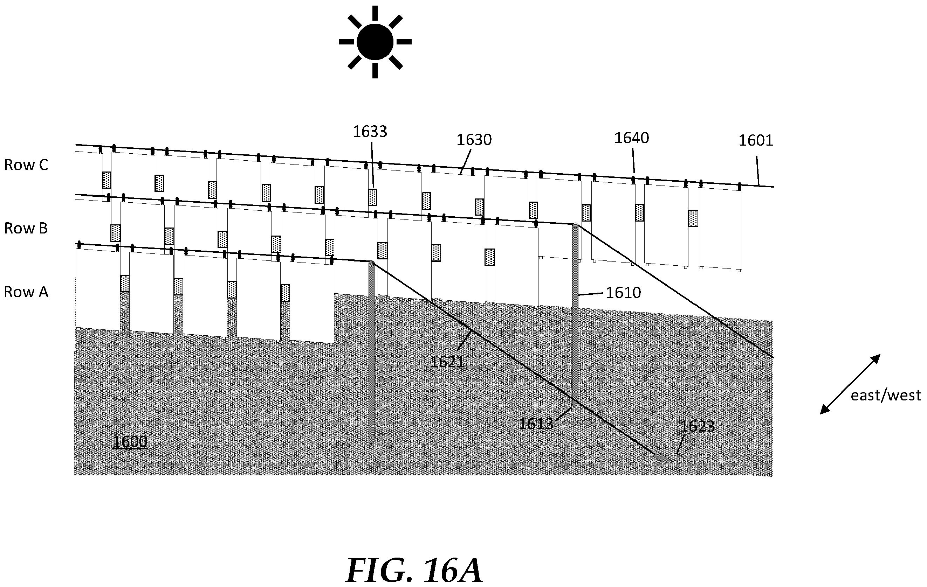

FIG. 16A shows an example array of vertically-installed solar panels that have a same height between rows at a first time of day. In FIG. 16A, three rows (e.g., Row A, Row B, Row C) of vertical solar panels may be shown. There may be more rows or fewer rows of vertical solar panels. These rows may be oriented in a substantially east and west direction, for example, in a geographic area where the sun rises in the east and sets in the west. These rows may be substantially parallel to each other. The distances between rows may be the same or different. The distances may be set in a way that the rows are sufficiently spaced apart, and/or the rows may be arranged in a horizontally offset manner, so as to minimize mutual blocking. In at least some situations, it may be difficult to minimize mutual blocking, for example, due to space constraint. It may also be desirable to utilize shading in a controlled and dynamic way to achieve results associated with power generation, crop growth, etc.

In the example of FIG. 16A, a row (e.g., each row) may comprise a plurality of vertical solar panels or solar panels 1630. These vertical solar panels 1630 may be mounted/hung on a cable (or hanging cable, beam, etc.) 1601, for example, via connectors 1640. The cable 1601 may be mounted/suspended on/in at least two poles 1610. Poles 1610 may be mounted on/in the ground 1600, for example, via an anchor 1613 at an end. Additional structures such as anchoring cables 1621 and anchors 1623 may be used, for example, to stabilize the mounting of the vertical solar panels 1630. The vertical solar panels 1630 may be connected to each other, for example, via spacers 1633. Electrical and/or electronic devices (e.g., junction box, optimizers, etc.) may be incorporated in and/or between the vertical solar panels, for example, in the spacers 1633. The U.S. Provisional Application No. 63/490,112 filed on March 14, 2023 incorporated by reference herein has more details on the example structures of the vertical solar panels and systems.

The vertical solar panels, mounting structures therefor, and/or the arrangement of rows, etc. are not limited to the example described herein with respect to FIG. 16A. Other forms of vertical solar panels, other mounting structures therefor, and/or other arrangement of rows, etc. may be used without departing from the spirit and scope of the present application.

In FIG. 16A, all the rows may have substantially the same height. For example, the time of day in FIG. 16A may be midday (e.g., noon). The sun may be in a substantially upward position, and the sunlight may project (e.g., shine) substantially vertically to the vertical solar panels, casting little shadow across panel rows. The power output of these solar panels may be at a low point in a day, as less sunlight may project on the side surfaces of the solar panels where photovoltaic cells are.

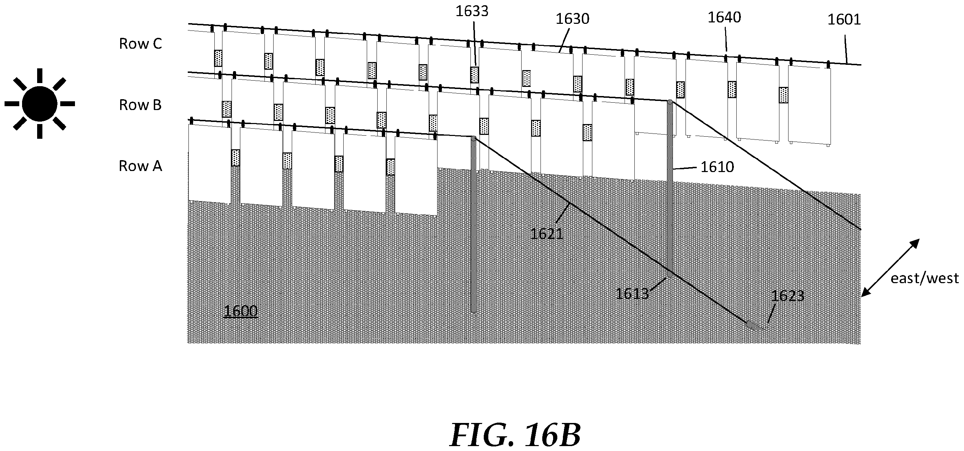

FIG. 16B shows an example array of vertically-installed solar panels that have a same height between rows at a second time of day. The second time of day may be, for example, morning or evening. At the second time of day, the sun may be in an oblique position. The sunlight may project at a smaller angle with respect to the ground (e.g., closer to horizontal), and more sunlight may project on the side surfaces of the vertical solar panels. A front row (e.g., Row A) may generate more electricity, for example, compared to at noon. The other rows (e.g., Row B, Row C) may be at least partially blocked and/or shaded by the row(s) in front of them. The inter-row shading may prevent the vertical solar panels from achieving its maximum power output.

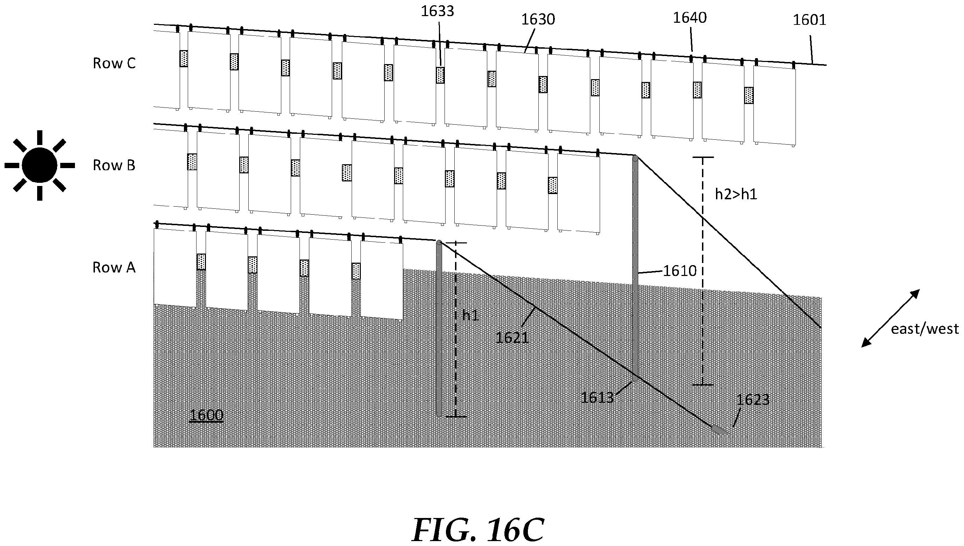

FIG. 16C shows an example array of vertically-installed solar panels that have different heights between rows at the second time of day. In the example of FIG. 16C, the sun is also at an oblique position (in the east or west). The front row (i.e., the row closest to the sun), for example, Row A, may have a first height (h1). A second row behind the front row, for example, Row B, may have a second height (h2). The second row may adjust the second height so that the second height is bigger than the first height (h2>h1). The second height may be adjusted so that at least a part of the second row of vertical solar panels are not blocked and/or are not shaded, for example, by the front row of vertical solar panels. For example, the second row may have an adjusted second height (h2) that is bigger than or equal to a total of the first height (h1) plus a vertical length of the solar panel 1630. As a result, the second row may be completely unblocked and may receive all the projecting sunlight. For another example, the second height (h2) may be bigger than the first height (h1) but less than a total of the first height (h1) plus a vertical length of the solar panel 1630. As the sunlight may be projecting at an angle above a horizontal ground, the sunlight may reach the entire side surfaces of the second row, even if lower ends of the second row overlap (or partially overlap) with (e.g., are behind) top ends of the front row. Further rows, for example, a third row (e.g., Row C) behind the second row (e.g., Row B), may have a height (h3, not shown) that is bigger than the second height (h2). An array of vertical solar panels may be adjusted to have cascading rows of vertical solar panels with cascading heights, with the row closest to the sun being the lowest. For example, in the morning, an east-most row of vertical solar panels may be the lowest row. Inter-row shading may be controlled, for example, based on height adjustment of different rows. Although the example mentions adjusting the heights of the back rows (e.g., Row B, Row C), alternatively or additionally, the heights of the front rows may be adjusted (e.g., reduced). For example, the height of Row B may be adjusted to be smaller than the height of Row C, and the height of Row A may be adjusted to be smaller than the height of Row B. The direction and/or order of height adjustment among the rows may be any selection or combination, as long as the adjusted rows comprise a distribution of heights that lead to desired inter-row shading.

The adjustment of heights of vertical solar panels may be realized using various means. For example, the heights of vertical solar panels 1630 may be adjusted by adjusting the heights of poles 1610. For example, the heights of vertical solar panels 1630 may be adjusted by adjusting the positions of the cable 1601 with respect to the poles 1610. For example, the heights of vertical solar panels 1630 may be adjusted by adjusting the tension of the cable 1601 which hangs the vertical solar panels 1630.

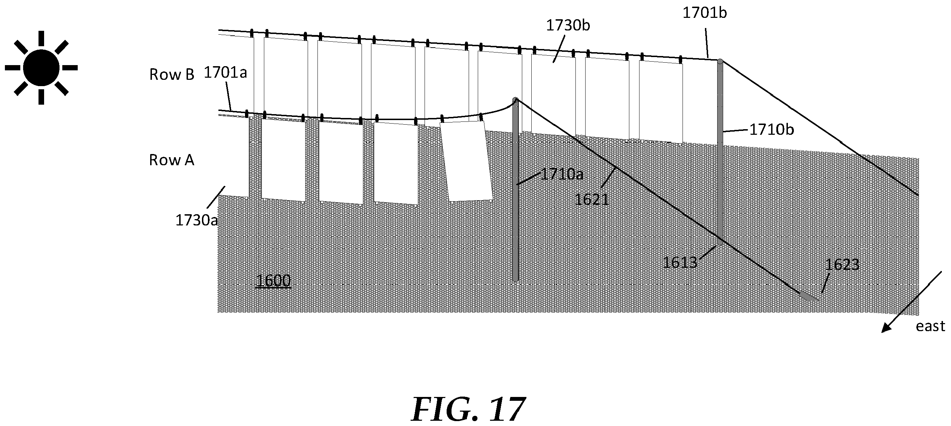

FIG. 17 shows an example of vertically-installed solar panels that achieve different heights between rows using sag control. In the example of FIG. 17, two rows (e.g., Row A, Row B) of vertical solar panels may be shown. There may be more than two rows. A row (e.g., each row) may comprise a plurality of vertical solar panels (e.g., 1730a, 1730b). The plurality of vertical solar panels (e.g., 1730a, 1730b) may be mounted (e.g., hung) on a hanging structure such as a cable (e.g., 1701a, 1701b). The hanging structure (e.g., 1701a, 1701b) may be mounted on a support structure such as poles (e.g., 1710a, 1710b). There may be other structures such as anchoring cable 1621, etc., as described with respect to FIG. 16A.

The hanging structure may be flexible and/or stretchable. For example, the hanging structure may be a cable, a rope, a wire, a cord, and/or so on. A length and/or tension of the hanging structure may be adjusted. The length of the hanging structure may be increased, and/or the tension of the hanging structure may be reduced, so that the hanging structure may be in a sagging position. For example, as shown in FIG. 17, the hanging structure 1701a of the front row (Row A) may be in a sagging position. In the sagging position, the hanging structure may sag (or bend, droop, sink, and/or so on) at and/or near the middle of the hanging structure. As a result, the height of the hanging structure may be generally lowered. On the other hand, the length of the hanging structure may be decreased, and/or the tension of the hanging structure may be increased or restored, so that the hanging structure may be in a stretched position. For example, the hanging structure 1701b of the second row (Row B) may be in a stretched position. In the stretched position, the height of the hanging structure (e.g., cable 1701b) may be at its maximum value, for example, the same as the height of the support structure (e.g., poles 1710b). As the vertical solar panels (e.g., 1730a, 1730b) are hung on the hanging structures (e.g., 1701a, 1701b), the vertical solar panels may change heights along with the hanging structures. For example, in FIG. 17, the vertical solar panels 1730a in the front row (Row A) may be lower (or smaller in height) than the vertical solar panels 1730b in the second row (Row B), for example, due to the sagging cable 1701a and stretched cable 1701b. Such different heights may reduce inter-row shading for the second row (Row B), for example, if the sun is in an oblique position (e.g., in the east). Reduced inter-row shading may increase power generation.

A length and/or tension of the hanging structure may be adjusted dynamically, for example, based on time of day, angle of the sun, detected result for inter-row shading, etc. The adjustment of the length and/or tension of the hanging structure may be referred to as sag control. Hanging structures of multiple rows (e.g., two or more rows) may be controlled between a sagging position and/or a stretched position, for example, to achieve desired inter-row shading. For example, if maximizing power output is preferred, when the sun is in an oblique position (e.g., in the east or in the west), a hanging structure (e.g., cable 1701a) of a front row (i.e., the row closest to the sun, e.g., Row A) may be controlled to reach a sagging position, and a hanging structure (e.g., cable 1701b) of a second or back row (e.g., Row B) may maintain a stretch position, so that the back row may be higher than the front row to receive more sunlight. For example, if curtailing power output is preferred, the front row may be controlled to have less or no sagging, so that the back row may remain at least partially blocked by the front row.

The initial heights of different rows may be substantially the same. For example, vertical solar panels of Row A and of Row B may have the same height, when their cables are both in a stretched position. Alternatively, the initial heights of different rows may be different. For example, the rows of vertical solar panels may be installed on a slope. For example, there may be a dominating orientation (e.g., the east), for example, if the other orientation (e.g., the west) is not usable, due to mountains/hills, tall buildings, etc. blocking the sun. The initial heights may be cascading, with the front row (e.g., east-most row) being the lowest. There may still be height control/adjustment, as inter-row shading may change (e.g., at different times of day).

The degrees of sagging may be controlled. For example, the degrees of sagging may vary among rows. For example, if there is a Row C (not shown) behind the Row B in FIG. 17, when the sun is in the east, the cable 1701b of Row B may also sag besides the cable 1701a of Row A, although to a lesser degree, so that Row B may be still higher than Row A and that Row C may be higher than Row B and may be less blocked. For example, the degrees of sagging for a row (e.g., the front row) may be controlled, so that a desired extent of inter-row shading may be achieved. The sagging for a row may be changed in a stepwise manner (uniform or non-uniform). For example, a row may initially have a height of 8 meters (around 26 feet), with no sagging of a cable (i.e., the cable is in a stretched position). The row may have a height of 4 meters (around 13 feet), for example, after a first level of sagging of the cable. The sagging may further increase, and the row may have a height of 2 meters (around 6.5 feet), for example, after a second level of sagging. In this example, the hanging structure such as a cable may increase/decrease the sag with a 2-4 meter (around 6.5-13 feet) interval in height. The numerical numbers described herein are merely examples. Other numbers may be used, for example, based on the size of the vertical solar panels, local conditions (geographic, climate, field type, etc.), etc. Alternatively or additionally, the sagging may be changed in a continuous manner. For example, the degree of sagging for a row (e.g., each row) may be changed more dynamically and continuously, for example, based on time of day, sun angle, detected weather condition, input of sensor for inter-row shading, etc. For example, mechanisms such as pulleys, lift, etc. may be used for the continuous position control.

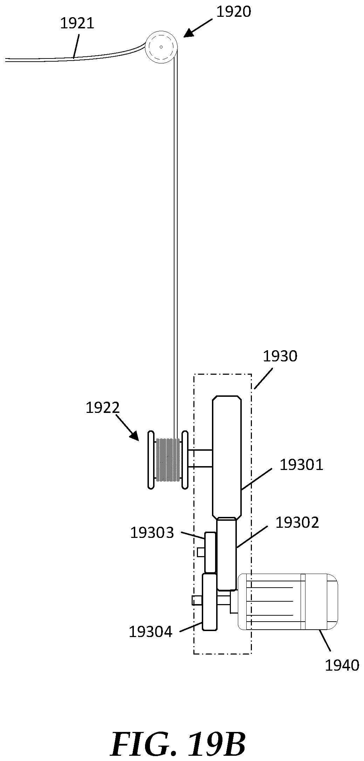

Known mechanisms may be used to adjust the length and/or tension of the hanging structure. For example, rope and pulley structures, gear structures, flagpole structures, etc. may be used for increasing/decreasing the length and/or tension of the hanging structure such as a cable. These structures may be operated manually or automatically. These structures may form a sag control system, together with other control parts such as motors, sensors, etc. An example structure of the sag control system will be described in detail herein with respect to FIG. 19B.

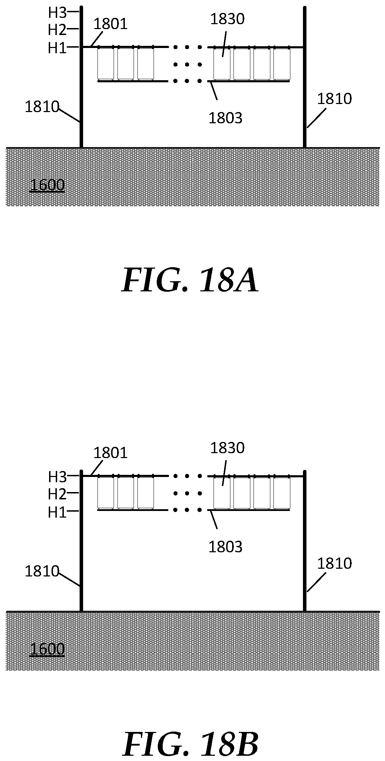

FIG. 18A and FIG. 18B show an example of adjusting the height of vertically-installed solar panels. As described herein, vertical solar panels may be mounted (e.g., hung) on a hanging structure (e.g., cable, beam, etc.) and the hanging structure may be mounted on a support structure (e.g., poles). A height of the vertical solar panels may be adjusted, for example, by changing a position of the hanging structure relative to the support structure.

In the example of FIG. 18A and FIG. 18B, a plurality of vertical solar panels 1830 may be mounted (e.g., hung) on a hanging structure (e.g., cable, beam, etc.) 1801, for example, via connectors 1640 (e.g., as shown in FIG. 16A). The plurality of vertical solar panels 1830 may be separated from each other and/or be interconnected (e.g., using wire 1803). The hanging structure 1801 may be mounted on a support structure (e.g., poles) 1810, via any mounting mechanism that may enable the hanging structure to dynamically change vertical positions on the support structure. For example, the mounting mechanism may be a gear structure, pulley structure, etc. that may secure the position of a cable via friction and that may stretch or release the cable. The mounting mechanism may be a movable pinching mechanism that may secure ends of the hanging structure (e.g., beam, bar, cable, etc.). The mounting mechanism may comprise holes or recesses that may hold the ends of the hanging structure. The mounting mechanism may use forces and/or tensions from air (e.g., vacuum), liquid, magnets, etc. to mount the hanging structure. The mounting mechanism may form a part with the support structure, the hanging structure, and/or both. The mounting mechanism may be detachable from the support structure and/or the hanging structure.

The support structure (e.g., poles) 1810 may comprise more than one position associated with mounting the hanging structure (e.g., cable, beam, etc.) 1801. For example, as shown in FIG. 18A and FIG. 18B, there may be three positions H1, H2, and H3. Each position may correspond to a height of the hanging structure 1801 as well as of the vertical solar panels 1830. For example, the lowest position H1 may correspond to a smallest height (e.g., h1 in FIG. 16C) of the vertical solar panels 1830. The middle position H2 may correspond to a bigger height (e.g., h2 in FIG. 16C) of the vertical solar panels 1830. FIG. 18A shows an example of the hanging structure 1801 and the vertical solar panels 1830 mounted at the lowest position H1 on the support structure 1810. FIG. 18B shows an example of the hanging structure 1801 and the vertical solar panels 1830 mounted at the highest position H3 on the support structure 1810. Although three positions may be shown, there may be any number of positions for the hanging structure on the support structure. The positions may be predetermined and/or discrete. The positions may be dynamic and/or continuous. The hanging structure may be mounted (e.g., locked) at a position on the support structure, for example, based on time of day, input of inter-row shading, etc.

The more than one position may be associated with one or more mounting mechanisms. For example, one mounting mechanism on/in the support structure may comprise more than one mounting position. For example, the mounting mechanism may comprise guiding rails for guiding the hanging structure (e.g., a beam) to move up or down relative to the support structure. The mounting mechanism may comprise locking (or stopping) structures for locking the hanging structure, for example, at each predetermined and/or desired position. For another example, the mounting mechanism may comprise a lifting structure that may lift or lower the hanging structure, and stop/hold the hanging structure at any predetermined and/or desired position, using controllable forces such as stepper motors, hydraulic drive, etc. Alternatively, a plurality of mounting mechanisms may be attached/connected/integrated to/on the support structure.

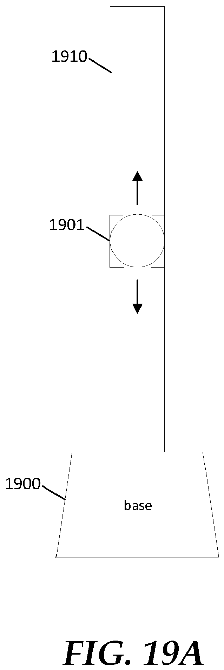

FIG. 19A shows an example of adjusting the height of vertically-installed solar panels. The example in FIG. 19A may be a side view of a support structure (e.g., poles) 1910 on which a hanging structure (e.g., beam, cable, etc.) 1901 may be mounted. A plurality of vertical solar panels (not shown in FIG. 19A) may be mounted (e.g., hung) on the hanging structure 1901. The support structure 1910 may be installed on a base 1900. The base may be the ground 1600 (as shown in e.g., FIG. 16A-16C, FIG. 17, FIGS 18A and 18B), and/or a base part connected to the support structure.

In the example, the hanging structure (e.g., beam, cable, etc.) 1901 may be movable up or down (as shown by the arrows in FIG. 19A) along the support structure (e.g., poles) 1910. As a result, the height of the hanging structure 1901 may be adjusted. Though not shown, there may be mechanisms that may stop/lock the hanging structure 1901 at a predetermined and/or desired position/height.

Alternatively or additionally, a height of the vertical solar panels may be adjusted, for example, by changing the length and/or height of the support structure. For example, the support structure (e.g., poles) may be telescopic. For example, the support structure (e.g., poles) may adjust its length above the ground, for example, by driving more or less length of poles into a hole in the ground. The support structure (e.g., poles) may comprise other structures that may increase/decrease height in a controlled way. For example, a structure like scissor lift may be used. The hanging structure may maintain its relative position with the support structure. The hanging structure may also adjust its position relative to the support structure, in addition to the adjustment of height realized by the support structure.

FIG. 19B shows an example of adjusting the height of vertically-installed solar panels. The example in FIG. 19B may be used for sag control as described with respect to FIG. 17. As shown in FIG. 19B, a length and/or tension of a hanging structure (e.g., a cable) 1921 may be adjustable via a rotational mechanism 1930 actuated by a motor 1940. The hanging structure 1921 may be connected to the rotational mechanism 1930, for example, via a pulley 1920 and a spool 1922. For example, the pulley 1920 may be located (e.g., mounted) at a top end of a support structure (e.g., a pole 1710a, 1710b in FIG. 17). The hanging structure (e.g., cable) 1921 may pass over the pulley 1920, for example, to extend downwardly along the support structure (e.g., pole). The hanging structure (e.g., cable) 1921 may be wound on the spool 1922. The spool 1922 may be rotatable around a spool axis, for example, in two directions. In one direction, the spool 1922 may release the hanging structure (e.g., cable) 1921, so that the hanging structure (e.g., cable) 1921 may have more length and/or less tension. In another direction, the spool 1922 may retract the hanging structure (e.g., cable) 1921, so that the hanging structure (e.g., cable) 1921 may have less length and/or more tension. For example, the spool 1922 may be located (e.g., mounted) at a lower position of the support structure (e.g., pole).

The spool 1922 may be connected to and driven by the rotational mechanism 1930. The rotational mechanism 1930 may connect the spool 1922 with the motor 1940 and may pass a driving force from the motor 1940 to the spool 1922. For example, the rotational mechanism 1930 may comprise a gear structure (e.g., gear set). FIG. 19B shows an example gear set. The gear set may comprise, for example, gears 19301, 19302, 19303, and 19304 that may mesh together. For example, the gear 19301 may be concentrically connected to the spool 1922 and may be rotatable together with the spool 1922. The gear 19301 may mesh with the gear 19302 which may be concentrically connected with the gear 19303. The gear 19303 may mesh with the gear 19304. The gear 19304 may be mounted on a rotation shaft of the motor 1940 and may be rotatable together with the motor 1940. When the motor 1940 is in operation, the motor 1940 may generate a rotational force (or torque) which may cause the gear 19304 to rotate. Rotational movements may be passed to the gear 19303, the gear 19302, the gear 19301, and the spool 1922. As the gears may have different sizes (e.g., different diameters), rotational speeds and power may be changed. For example, the gear 19301 may have a larger diameter than the other gears. The gear 19301 may rotate more slowly and with more power, for example, compared to the gear 19304. The power may enable the gear 19301 to drive the spool 1922 to rotate, for example, in a direction in which the load (e.g., caused by weights of solar panels) on the hanging structure (e.g., cable) 1921 may need to be overcome.

The motor 1940 may be stepper motor, servo motor, linear motor, or any other motor that may provide precise control over position and that may apply to vertical solar panels. The motor 1940 may be controlled by a control circuit (not shown) that may receive signals from, for example, sensors (not shown). The motor 1940 may be powered by electricity generated by the solar panels. The motor 1940 may be replaced or supplemented by other drive sources such as hydraulic machines. The rotational mechanism 1930 may comprise any designs of a gear set. The rotational mechanism 1930 may comprise structures other than gears. The rotational mechanism 1930 may comprise no gears. The rotational mechanism 1930 may be replaced or supplemented by other mechanisms such as a linear mechanism. The hanging structure (e.g., cable) 1921 may be adjusted via structures other than pulley and/or spool. For example, the hanging structure (e.g., cable) 1921 may be adjusted (e.g., pulled) by a tension spring, a turnbuckle, a counterweight, etc. Although not shown, one or more of the components described herein may be placed on, under, and/or inside the support structure (e.g., pole). Any other structures may be used to integrate the sag control system with the vertically-installed solar panels. Although the structures (or mechanisms) are shown to be on one side of the hanging structure (e.g., cable) 1921, it is merely an example. For example, the structures (or mechanisms) may apply to both sides of the hanging structure (e.g., cable) 1921.

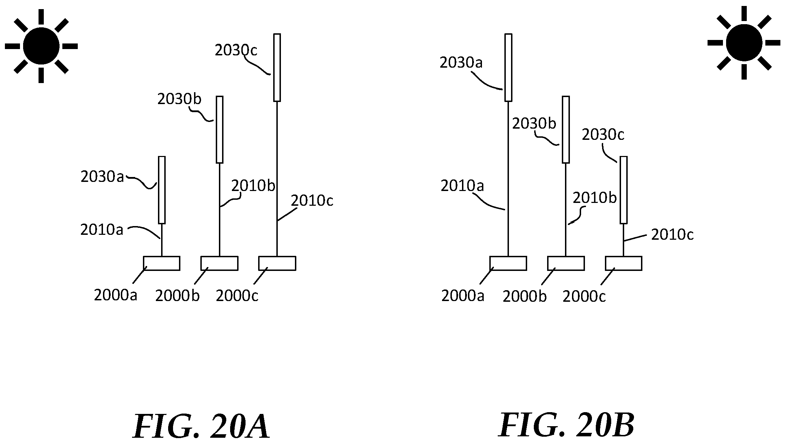

FIG. 20A and FIG. 20B show an example of adjusting the height of vertically-installed solar panels. FIG. 20A and FIG. 20B may comprise side views of rows of vertical solar panels 2030a, 2030b, 2030c mounted on respective support structures (e.g., poles) 2010a, 2010b, 2010c. The support structures (e.g., poles) 2010a, 2010b, 2010c may be installed on respective bases (e.g., ground, base part, etc.) 2000a, 2000b, 2000c. In either FIG. 20A or FIG. 20B, the sun is at an oblique position (i.e., at an angle with respect to ae horizontal ground), which may cause inter-row shading between the rows. The support structures (e.g., poles) 2010a, 2010b, 2010c may be adjusted to have different heights, so that the row closest to the sun may have the smallest height and the row farthest from the sun may have the biggest height. Such vertical adjustment of vertical solar panels may change inter-row shading. For example, power generation of these solar panels may be affected. As described herein, the support structures (e.g., poles) 2010a, 2010b, 2010c may comprise telescopic structures, scissor lift, etc. The structures as described with respect to FIG. 20A and FIG. 20B may also be used in other examples, such as the ones as shown in FIG. 16A-17.

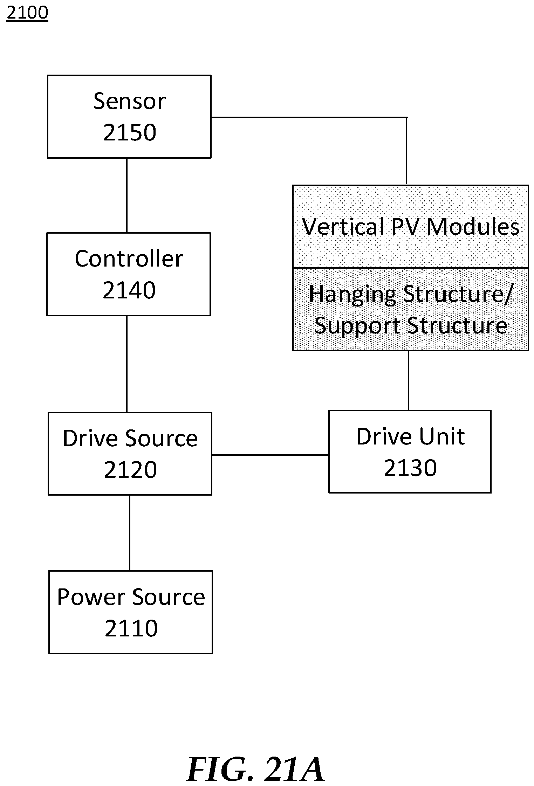

FIG. 21A shows an example control system for adjusting the height of vertically-installed solar panels. As described herein with respect to FIGS. 16A-16C, FIG. 17, FIGS. 18A-18B, FIGS. 19A-19B, and FIGS. 20A-20B, vertical solar panels (e.g., 1630, 1730a, 1730b, 1830, 2030a, 2030b, 2030c) may be installed indirectly on support structures (e.g., 1610, 1710a, 1710b, 1810, 1910), for example, via hanging structures (e.g., 1601, 1701a, 1701b, 1801, 1901). Vertical solar panels (e.g., 1630, 1730a, 1730b, 1830, 2030a, 2030b, 2030c) may be installed directly on support structures (e.g., 2010a, 2010b, 2010c). The heights of the vertical solar panels may be adjusted, for example, by adjusting the lengths and/or tensions of the hanging structures (e.g., sag control). Alternatively or additionally, the heights of the vertical solar panels may be adjusted, for example, by adjusting the positions of the hanging structures relative to the support structures. Alternatively or additionally, the heights of the vertical solar panels may be adjusted, for example, by adjusting the heights of the support structures. A control system may be used to realize the adjustment.

FIG. 21A shows an example control system 2100. The control system 2100 may comprise power source 2110, drive source 2120, drive unit 2130, controller 2140, and sensor 2150. The power source 2110 may comprise a power storage unit such as a battery unit. The power storage unit may receive and/or store electricity generated by the vertical solar panels. Alternatively or additionally, the power source 2110 may comprise a power converter (e.g., DC-DC converter), and electricity generated by the vertical solar panels may be harvested, converted in real time to serve the control system 2100.

The power from the power source 2110 may serve (e.g., drive, power) the drive source 2120. The drive source 2120 may be any motor that may offer precise control over position and that may have sufficient torque to operate with the vertical solar panels. For example, the drive source 2120 may be stepper motor, servo motor, linear motor, and/or so on. For example, the drive source 2120 may be a motor 1940 as described with respect to FIG. 19B. The motor may be replaced or supplemented by other drive sources such as hydraulic machines (e.g., hydraulic motors, cylinders, etc.), pneumatic machines (e.g., pneumatic actuators, cylinders, etc.), etc. The drive source 2120 may actuate the drive unit 2130, for example, if powered by the power source 2110 and activated by the controller 2140.

The drive unit 2130 may comprise mechanisms configured to transfer and/or translate the energy and movement from the drive source 2120 to the hanging structure/support structure. For example, the drive unit 2130 may be configured to translate rotational movement and torque from motor 2120 into linear movement of the hanging structure (e.g., stretching, loosening, up, down) and/or of the support structure. For example, the mechanisms may comprise gear structures. The gear structures may translate the movement, for example, using rack and pinion. The gear structures may transfer the torque, for example, using a gear set. For example, the drive unit 2130 may be a rotational mechanism (e.g., gear set) 1930 as described with respect to FIG. 19B. For example, the drive unit 2130 may comprise linear mechanisms connected to the hanging structure/support structure for realizing up/down movements. The drive unit 2130, if actuated by the drive source (e.g., motor) 2120, may actuate the hanging structure and/or the support structure to realize increase or decrease of the height of the vertical solar panels.

The controller 2140 may be used to control the drive source (e.g., motor) 2120 for realizing controlled position change for the hanging structure/support structure for the vertical solar panels. For example, the controller 2140 may send a signal to activate the drive source (e.g., motor) 2120, for example, if a need for adjustment of heights of the vertical solar panels is detected (e.g., if inter-row shading exceeds a threshold, and/or if a predetermined time of day is reached, etc.). The signal may indicate how long the drive source 2120 operates. Alternatively or additionally, the controller 2140 may send a signal to deactivate the drive source (e.g., motor) 2120, for example, if a target degree of inter-row shading is reached. The controller 2140 may be any controller that may be programmed to execute control methods. For example, the controller 2140 may comprise programmable integrated circuits (or chips) such as programmable logic controllers (PLCs). The controller 2140 may be a separate controller. Alternatively, the controller 2140 may be a combined controller which may incorporate electronic functions associated with the solar panels, for example, inverter control, battery charging control, fault detection and diagnostics, temperature management, output optimization functions such as maximum power point tracking (MPPT), etc. The controller 2140 may be for one or more rows. The controller 2140 may be for the whole solar panel system.

The controller 2140 may be configured to receive inputs from the sensor 2150. The sensor 2150 may be used to detect, for example, inter-row shading for the vertical solar panels. For example, the sensor 2150 may comprise one or more irradiance sensors. An irradiance sensor is a device designed to measure the amount of solar radiation or sunlight intensity at a particular location. For example, the sensor 2150 may comprise one or more imaging sensors such as cameras. Signals from the imaging sensors may go through image processing algorithms to extract information on, for example, degrees of inter-row shading. The sensor 2150 may be installed on and/or close to the vertical solar panels. Outside vehicles such as drones may be used to take pictures and/or measure solar radiation associated with the solar panels. Alternatively or additionally, one or more optimizers may be used as sensor 2150. An optimizer may refer to a device that is used to enhance the performance of solar panels, for example, by maximum power-point tracking one or more substrings of solar cells disposed on one or more solar panels. An optimizer may comprise a DC/DC converter. An optimizer may comprise a DC/AC converter (e.g., a microinverter). An optimizer may monitor the performance of individual solar panels or solar panels in real time and may communicate data on the performance with a controller. As the performance of individual solar panels may be affected by the inter-row shading, degrees (or levels) of inter-row shading may be estimated, tracked, and/or communicated by one or more optimizers. For example, one or more optimizers may send a signal (e.g., a "keep adjusting" signal) to the controller 2140 to continue adjustment as long as power is increasing with change of height. With optimizers used as the sensor 2150, fewer or no additional sensors may be needed. Material and/or installation cost may be reduced. A single optimizer may be connected to a single solar panel. In some cases, a single solar panel may comprise multiple optimizers (e.g., substring optimizers). In some cases, a single optimizer (e.g., a multi-panel or multi-module optimizer) may be connected to two or more solar panels. In some cases, a row of solar panels may comprise solar panels that are each connected to an optimizer. In some cases, a subset of solar panels in the row of solar panels may be connected to an optimizer (e.g., a string optimizer), while other solar panels in the row of solar panels might be directly connected to one another without optimizers. Alternatively or additionally, other power electronics that may measure/estimate power produced by the solar panels without affecting the power may be used as sensor 2150. For example, a voltage sensor and/or a current sensor measuring the output of a solar panel may be used as sensor 2150. For example, each solar panel may have a voltage sensor. For example, a single current sensor may be connected to a string of solar panels (e.g., solar panels connected in series have a common current). The optimizers, microinverters, substring optimizers and so on, and optimization-less electronics at a solar panel level may be collectively referred to as module level power electronics (MLPE).

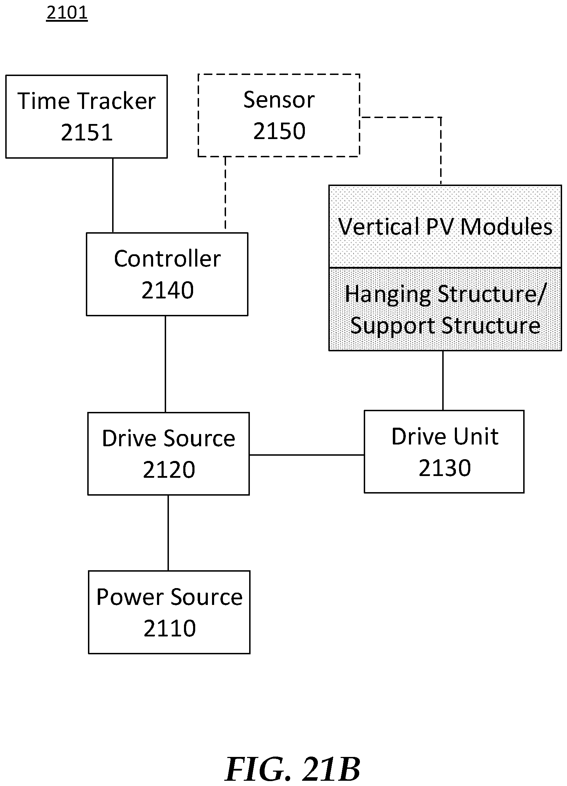

FIG. 21B shows another example control system 2101 for adjusting the height of vertically-installed solar panels. As shown in FIG. 21B, the sensor 2150 may be replaced or supplemented by a time tracker (e.g., a clock or timer) 2151 that may be used to track the time of day. For example, a simple version of control system 2101 may be realized by activating the drive source (e.g., motor) 2120 based on time of day. For example, for an array of east-west oriented vertical solar panels, based on a first time of day (e.g., morning), the controller 2140 may instruct the drive source 2120 (e.g., of a first row) to operate for a length of time, in which the vertical solar panels (e.g., of the first row) may be driven to reach a first height (e.g., a lowest position). For example, based on a second time of day (e.g., noon), the controller 2140 may instruct the drive source 2120 (e.g., of the first row) to operate for a length of time, in which the vertical solar panels (e.g., of the first row) may be driven to reach a second height (e.g., a highest position). For example, based on a third time of day (e.g., evening), the controller 2140 may instruct the drive source 2120 (e.g., of a last row) to operate for a length of time, in which the vertical solar panels (e.g., of the last row) may be driven to reach a first height (e.g., a lowest position). The possible removal of real-time feedback from the vertical solar panels on inter-row shading may further simplify the control system and reduce the cost.

At least part of the components of the control system 2100 or 2101 may be incorporated into the vertical solar panels and/or their mounting structures. For example, the electronic components such as the controller 2140, the sensor 2150, the time tracker 2151 may be located in/on/between the vertical solar panels, and/or on/in the mounting structures (e.g., poles, beams, etc.), etc. For example, the drive source (e.g., motor) 2120 and/or drive unit 2130 may be incorporated in/on/under the mounting structures. For example, the poles may be hollow, and motors, gears etc. may be located inside the poles. The power source 2110 may be located in/on/between the vertical solar panels, and/or in/on/under the mounting structures, depending on the weight, wirings, adjacencies to the drive source, etc. Alternatively, at least part of the components of the control system 2100 or 2101 may be integrated as a separable device/module which may be connected to vertical solar panels and/or their mounting structures for enabling the height adjustment functions described herein. For example, the separable device/module may be used to retrofit existing vertical PV systems. For example, the separable device/module may connect to a hanging cable of an existing vertical PV system, and may automate the length/tension adjustment of the hanging cable to realize height adjustment of the vertical solar panels.

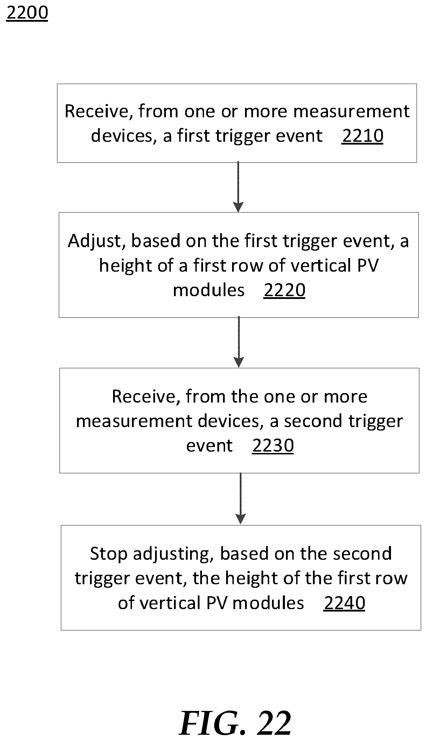

FIG. 22 shows an example method of adjusting the height of vertically-installed solar panels. In the example method (e.g., flowchart 2200), one or more steps may be performed by one or more components of the control system as described herein with respect to FIGS. 21A and 21B. One or more steps may be removed, added, re-ordered, combined, without departing from the spirit and scope of the present application.

At step 2210, a first trigger event may be received from one or more measurement devices, for example, by a controller 2140 (e.g., as shown in FIGS. 21A and 21B). The one or more measurement devices may comprise, for example, sensor 2150 and/or time tracker (e.g., a clock or timer) 2151 (e.g., as shown in FIGS. 21A and/or 21B). The first trigger event may be associated with inter-row shading. For example, the first trigger event may be a degree (or level) of an inter-row shading exceeding a predetermined threshold. For example, the first trigger event may indicate that an area of the inter-row shading (e.g., between two rows) may be excessively large, which may affect power output from associated vertical solar panels. The first trigger event may indicate (e.g., based on measurements provided by the module level power electronics, or MLPE) that power production (e.g., a power production level) of a particular row of solar panels is below a threshold. The first trigger event may indicate (e.g., based on measurements provided by MI,PE) that power production (e.g., a power production level) of a particular panel in a row of solar panels is below a threshold. The first trigger event may be associated with time of day. For example, the first trigger event may indicate that it is at late afternoon when the sun is at an oblique position.

At step 2220, a height of a first row of vertical solar panels may be adjusted, for example, based on the first trigger event. The first row of vertical solar panels may be a front row (e.g., a row closest to the sun). The height of the first row may be adjusted, for example, for changing the inter-row shading. For example, the height of the first row may be reduced, so that a second row behind the first row may be relatively higher and may receive more sunlight. For example, the height of the first row may be increased, so as to block a second row more, for example, for curtailing power output. Alternatively, the first row of vertical solar panels may be other rows such as a back row (e.g., a row farthest from the sun). The height of the back row may be adjusted instead of and/or together with the front row, for example, to change the inter-row shading. The adjustment of the height may be realized via various means, for example, sag control, change of relative positions between a hanging structure and a support structure, change the height of a support structure, etc., as described herein in detail with respect to FIG. 17 - FIG. 21B.

At step 2230, a second trigger event may be received from the one or more measurement devices, for example, by the controller 2140. The second trigger event may be associated with inter-row shading. For example, the second trigger event may be a degree (or level) of an inter-row shading not exceeding a predetermined threshold and/or reaching a desired value. For example, the second trigger event may be associated with time of day. For example, the second trigger event may indicate that the (current) height difference between rows may lead to desirable power output from associated vertical solar panels and that no further adjustment of height may be needed. In some examples, the second trigger event may simply be an indication to stop. For example, an operator (e.g., a person) may send a signal to stop the height adjustment. The signal may be received by the controller 2140 as the second trigger event.

At step 2240, the height adjustment for the first row of vertical solar panels may stop, for example, based on the second trigger event. As described herein with respect to step 2230, the second trigger event may indicate that height adjustment is no longer needed. For example, the controller 2140 may stop the height adjustment as a result.

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1. A method comprising anchoring a support structure at an installation site for solar panels, the support structure comprising a hanging cable for hanging solar panels.

Clause 2. The method of clause 1, further comprising deploying a plurality of solar panels onto the hanging cable via a plurality of connectors, wherein the plurality of solar panels is interconnected with spacers, and each panel of the plurality of solar panels comprises at least one of the plurality of connectors.

Clause 3. The method of clause 1 or clause 2, further comprising locking the plurality of solar panels on the hanging cable via the plurality of connectors.

Clause 4. The method of any one of clauses 1 to 3, wherein the support structure further comprises at least two poles, and the anchoring a support structure further comprises: anchoring the at least two poles; and stretching the hanging cable between the at least two poles.

Clause 5. The method of any one of clauses 1 to 4, the deploying of the plurality of solar panels further comprising moving the plurality of solar panels out of a packaging along a guiding member of the packaging, wherein the guiding member is configured to be attached to the support structure and aligned with the cable.

Clause 6. The method of any one of clauses 1 to 5, wherein each panel comprises at least two of the plurality of connectors, and the at least two of the plurality of connectors are attached to a top end of the panel.

Clause 7. The method of any one of clauses 1 to 6, wherein each panel further comprises at least one additional connector attached to a bottom end of the panel, and the at least one additional connector is configured to connect to an additional cable.

Clause 8. The method of any one of clauses 1 to 7, wherein the solar panels are vertical solar panels.

Clause 9. A method comprising anchoring a support structure at an installation site for solar panels, the support structure comprising at least two anchoring poles.

Clause 10. The method of clause 9, further comprising deploying, to the support structure, a plurality of solar panels which are fixedly connected to a cable, by fastening the cable to the at least two anchoring poles.

Clause 11. The method of clause 9 or clause 10, further comprising moving the plurality of solar panels out of a packaging along a guiding member of the packaging, wherein the guiding member is configured to be attached to the support structure.

Clause 12. The method of any one of clauses 9 to 11, wherein the plurality of solar panels is interconnected with spacers.

Clause 13. The method of any one of clauses 9 to 12, wherein the plurality of solar panels is interconnected with at least one rigid wire for restricting movements of the plurality of solar panels.

Clause 14. The method of any one of clauses 9 to 13, wherein the plurality of solar panels is interconnected with at least one wire, and the method further comprises: fastening the at least one wire to the support structure, for restricting movements of the plurality of solar panels.

Clause 15. The method of any one of clauses 9 to 14, wherein the solar panels are vertical solar panels.

Clause 16. A method comprising connecting a plurality of solar panels with spacers, each panel of the plurality of solar panels comprising at least one cable connector at an end of the panel.

Clause 17. The method of clause 16, further comprising connecting each panel with a first link member.

Clause 18. The method of clause 16 or clause 17, further comprising attaching each panel to a first guiding member of a packaging, wherein the first link member is movably attached to the first guiding member.

Clause 19. The method of any one of clauses 16 to 18, wherein the at least one cable connector is configured to connect to a hanging cable, and wherein the first guiding member is configured to align to the hanging cable.

Clause 20. The method of any one of clauses 16 to 19, wherein each panel of the plurality of solar panels further comprises at least one wire connector at a different end of the panel, and the method further comprises: connecting the plurality of solar panels to a wire, using the at least one wire connector of each panel.

Clause 21. The method of any one of clauses 16 to 20, further comprising: connecting each panel with a second link member; and attaching each panel with a second guiding member of the packaging, wherein the second link member is movably attached to the second guiding member, and the first link member and the second link member are connected to different ends of each panel.

Clause 22. The method of any one of clauses 16 to 21, further comprising incorporating one or more electrical components in each of the spacers.

Clause 23. The method of any one of clauses 16 to 22, wherein the solar panels are vertical solar panels.

Clause 24. A method comprising mounting a plurality of rows of vertical solar panels, each row using a hanging cable to hang a plurality of vertical solar panels.

Clause 25. The method of clause 24, further comprising connecting the plurality of rows with each other, using at least one additional cable.

Clause 26. The method of clause 24 or clause 25, wherein the plurality of vertical solar panels is connected with each other via a wire, and wherein the at least one additional cable intersects with one or both of the hanging cable and the wire.

Clause 27. A method comprising manufacturing a solar panel, based on a deformable material and a reinforcing structure, wherein the reinforcing structure is configured to reinforce the deformable material, and wherein the solar panel is configured to be hung.

Clause 28. The method of clause 27, wherein the manufacturing comprises: exerting tensile forces to the reinforcing structure; and overmolding the deformable material on the reinforcing structure.

Clause 29. The method of clause 27 or clause 28, wherein the reinforcing structure comprises a plurality of wires, and the plurality of wires are substantially parallel.

Clause 30. The method of any one of clauses 27 to 29, wherein the manufacturing comprises: positioning the reinforcing structure between layers of the deformable material, and wherein the reinforcing structure extends beyond the deformable material.

Clause 31. The method of any one of clauses 27 to 30, wherein the reinforcing structure comprises a plurality of resistance structures for reinforcing connection with the deformable material.

Clause 32. The method of any one of clauses 27 to 31, wherein the reinforcing structure comprises a connection part for hanging the solar panel.

Clause 33. The method of any one of clauses 27 to 32, further comprising: forming one or more holes at selected locations in the solar panel, and wherein the one or more holes are for one or more of: wind management; load management; rigidity management; or shade management.

Clause 34. The method of any one of clauses 27 to 33, further comprising: mounting one or more frames at selected locations in the solar panel, and wherein at least one frame of the one or more frames is configured to hang the solar panel.

Clause 35. The method of any one of clauses 27 to 34, further comprising: mounting one or more frames at selected locations in the solar panel, and wherein at least one frame of the one or more frames is configured to allow the solar panel to lock, under self-weight, in the at least one frame.

Clause 36. The method of any one of clauses 27 to 35, further comprising: forming one or more flexible joints at selected locations in the solar panel, and wherein the one or more flexible joints are for wind management.

Clause 37. A method comprising pre-rolling a plurality of solar panels on an elongated core, wherein the plurality of solar panels are flexible, and wherein the plurality of solar panels are configured to be hung.

Clause 38. The method of clause 37, wherein the elongated core is configured to allow a hanging structure pass through, and wherein the hanging structure is configured to hang the plurality of solar panels.

Clause 39. The method of clause 37 or clause 38, further comprising: passing a cable through the elongated core, wherein the cable is configured to be stretched for hanging the plurality of solar panels.

Clause 40. The method of any one of clauses 37 to 39, wherein the elongated core is configured to be a hanging structure for hanging the plurality of solar panels.

Clause 41. The method of any one of clauses 37 to 40, further comprising: hanging the pre-rolled solar panels; and unrolling the pre-rolled solar panels.

Clause 42. A method comprising receiving, from one or more measurement devices, a first trigger event; and adjusting, based on the first trigger event, a height of a first row of vertical solar panels, wherein the first row of vertical solar panels comprises a plurality of vertically-installed solar panels.

Clause 43. The method of clause 42, wherein at least one solar panel of the plurality of vertically-installed solar panels is a bifacial solar panel.

Clause 44. The method of clause 42 or clause 43, wherein the plurality of vertically-installed solar panels are hung.

Clause 45. The method of any one of clauses 42 to 44, wherein the first trigger event is associated with time of day.

Clause 46. The method of any one of clauses 42 to 45, wherein the first trigger event is associated with inter-row shading.

Clause 47. The method of any one of clauses 42 to 46, wherein the first trigger event is associated with a power production level.

Clause 48. The method of any one of clauses 42 to 47, wherein at least one measurement device of the one or more measurement devices is an optimizer associated with the solar panels.

Clause 49. The method of any one of clauses 42 to 48, wherein the adjusting the height of the first row of vertical solar panels further comprises: adjusting the height of the first row of vertical solar panels so that an inter-row shading between the first row of vertical solar panels and a second row of vertical solar panels is increased.

Clause 50. The method of any one of clauses 42 to 49, wherein the adjusting the height of the first row of vertical solar panels further comprises: adjusting a tension of a cable associated with the first row of vertical solar panels, wherein the cable is configured to hang the plurality of vertically-installed solar panels.

Clause 51. The method of any one of clauses 42 to 50, further comprising: receiving, from the one or more measurement devices, a second trigger event; and stop adjusting, based on the second trigger event, the height of the first row of vertical solar panels.

Clause 52. A method comprising adjusting a tension of a first cable associated with a first row of vertical solar panels, the first cable being at a first height after adjustment, wherein the first row of vertical solar panels comprises a plurality of vertically-installed first solar panels that are hung on the first cable.

Clause 53. The method of clause 52, further comprising adjusting a tension of a second cable associated with a second row of vertical solar panels, the second cable being at a second height after adjustment, wherein the second row of vertical solar panels comprises a plurality of vertically-installed second solar panels that are hung on the second cable, wherein the first height is smaller than the second height.

Clause 54. The method of clause 52 or clause 53, wherein an area of inter-row shading between the first row of vertical solar panels and the second row of vertical solar panels is decreased after the adjusting the tension of the first cable.

Clause 55. The method of any one of clauses 52 to 54, further comprising: receiving, from one or more measurement devices, a trigger event, wherein the adjusting the tension of the first cable and the adjusting the tension of the second cable are based on the trigger event.

Clause 56. The method of any one of clauses 52 to 55, wherein the trigger event is associated with time of day.

Clause 57. The method of any one of clauses 52 to 56, wherein the trigger event is associated with inter-row shading.

Clause 58. The method of any one of clauses 52 to 57, wherein at least one measurement device of the one or more measurement devices is an optimizer associated with one or more of: the first solar panels; or the second solar panels.

Clause 59. A method comprising receiving, from one or more measurement devices, a first trigger event associated with inter-row shading between a first row and a second row, wherein each row of the first row and the second row comprises a plurality of vertically-installed solar panels.

Clause 60. The method of clause 59, further comprising adjusting, based on the first trigger event, a height of one or more of: the first row; or the second row.

Clause 61. The method of clause 59 or clause 60, wherein at least one measurement device of the one or more measurement devices is an optimizer associated with the solar panels.

Clause 62. The method of any one of clauses 59 to 61, further comprising: receiving, from the one or more measurement devices, a second trigger event associated with inter-row shading between the first row and the second row; and stop adjusting, based on the second trigger event, the height of the one or more of: the first row; or the second row.

Clause 63. The method of any one of clauses 59 to 62, wherein the plurality of vertically-installed solar panels are hung.

Clause 64. The method of any one of clauses 59 to 63, wherein at least one solar panel of the plurality of vertically-installed solar panels is a bifacial solar panel.

Clause 65. A method comprising anchoring a support structure at an installation site for solar panels, the support structure comprising at least two anchoring poles.

Clause 66. The method of clause 65, further comprising attaching a guiding member of a packaging to the support structure.

Clause 67. The method of clause 65 or clause 66, further comprising moving a plurality of solar panels out of the packaging along the guiding member and onto the support structure.

Clause 68. The method of any one of clauses 65 to 67, wherein the support structure further comprises a hanging cable configured to hang the plurality of solar panels, the hanging cable being stretched between the at least two anchoring poles, and the attaching the guiding member further comprises aligning the guiding member with the hanging cable.

Clause 69. The method of any one of clauses 65 to 68, wherein the plurality of solar panels are preassembled to a hanging cable, and the method further comprises fastening the hanging cable to the at least two anchoring poles.

Clause 70. The method of any one of clauses 65 to 69, wherein the plurality of solar panels are interconnected with spacers, and wherein the spacers are configured to hold one or more electrical components.

Clause 71. The method of any one of clauses 65 to 70, further comprising connecting, via a wire, the plurality of solar panels with an adjacent row of solar panels.

Clause 72. A method comprising exerting tensile forces to a reinforcing structure.

Clause 73. The method of clause 72, further comprising overmolding a deformable material on the reinforcing structure.

Clause 74. The method of clause 72 or clause 73, further comprising forming a solar panel that is configured to be hung.

Clause 75. The method of any one of clauses 72 to 74, wherein the reinforcing structure comprises a plurality of wires, and the plurality of wires are substantially parallel.

Clause 76. The method of any one of clauses 72 to 75, wherein the reinforcing structure extends beyond the deformable material.

Clause 77. The method of any one of clauses 72 to 76, further comprising forming one or more holes at selected locations in the solar panel, and wherein the one or more holes are associated with one or more of: wind management; load management; rigidity management; or shade management.

Clause 78. The method of any one of clauses 72 to 77, further comprising mounting one or more frames at selected locations in the solar panel, and wherein at least one frame of the one or more frames is associated with attaching the solar panel to a hanging structure.

Clause 79. The method of any one of clauses 72 to 78, further comprising forming one or more flexible joints at selected locations in the solar panel, and wherein the one or more flexible joints are associated with wind management.

Clause 80. The method of any one of clauses 72 to 79, wherein the solar panel is flexible, and the method further comprises rolling the solar panel around an elongated core.

Clause 81. The method of any one of clauses 72 to 80, wherein the elongated core is hollow, and the method further comprises passing a hanging structure through the elongated core.

Clause 82. The method of any one of clauses 72 to 81, wherein the elongated core is configured to be used as a hanging structure for the solar panel, based on the solar panel being unrolled.

Clause 83. A method comprising receiving, from one or more measurement devices, a first trigger event.

Clause 84. The method of clause 83, further comprising adjusting, based on the first trigger event, a height of a first row of vertical solar panels, wherein the first row of vertical solar panels comprises a plurality of vertically-installed solar panels.

Clause 85. The method of clause 83 or clause 84, wherein the first trigger event is associated with one or more of: time of day; inter-row shading; or a power production level.

Clause 86. The method of any one of clauses 83 to 85, wherein at least one measurement device of the one or more measurement devices is an optimizer associated with the solar panels.

Clause 87. The method of any one of clauses 83 to 86, wherein the adjusting the height of the first row of vertical solar panels further comprises: adjusting the height of the first row of vertical solar panels so that an inter-row shading between the first row of vertical solar panels and a second row of vertical solar panels is increased.

Clause 88. The method of any one of clauses 83 to 87, wherein the adjusting the height of the first row of vertical solar panels further comprises: adjusting a tension of a cable associated with the first row of vertical solar panels, wherein the cable is configured to hang the plurality of vertically-installed solar panels.

Clause 89. The method of any one of clauses 83 to 88, further comprising: receiving, from the one or more measurement devices, a second trigger event; and stop adjusting, based on the second trigger event, the height of the first row of vertical solar panels.

Clause 90. A system comprising a plurality of solar panels.

Clause 91. The system of clause 90, further comprising a packaging, the packaging comprising a guiding member, wherein the plurality of solar panels are configured to be assembled along the guiding member in the packaging.

Clause 92. The system of clause 90 or clause 91, further comprising a support structure, the support structure comprising at least two anchoring poles, wherein the support structure is configured to be installed at an installation site via the at least two anchoring poles, and wherein the support structure is configured to be attachable to the guiding member.

Clause 93. The system of any one of clauses 90 to 92, wherein the support structure further comprises a hanging cable configured to hang the plurality of solar panels between the at least two anchoring poles, and the hanging cable is configured to align with the guiding member.

Clause 94. The system of any one of clauses 90 to 93, wherein the plurality of solar panels are interconnected with spacers, and wherein the spacers are configured to hold one or more electrical components.

Clause 95. An apparatus comprising: a plurality of photovoltaic cells; a mounting structure attached to at least one side of the plurality of photovoltaic cells; and one or more electrical components disposed at the mounting structure and electrically connected with the plurality of photovoltaic cells.

Clause 96. The apparatus of clause 95, wherein the mounting structure comprises a reinforcing structure overmolded with a deformable material.

Clause 97. The apparatus of clause 95 or clause 96, wherein the reinforcing structure is preloaded with tensile forces.

Clause 98. The apparatus of any one of clauses 95 to 97, wherein the reinforcing structure comprises a plurality of wires, and the plurality of wires are substantially parallel.

Clause 99. The apparatus of any one of clauses 95 to 98, wherein the mounting structure is configured to be hung.

Clause 100. The apparatus of any one of clauses 95 to 99, wherein the mounting structure further comprises one or more holes, and wherein the one or more holes are associated with one or more of: wind management; load management; rigidity management; or shade management.

Clause 101. The apparatus of any one of clauses 95 to 100, wherein the mounting structure further comprises one or more frames, and wherein at least one frame of the one or more frames is associated with attaching the mounting structure to a hanging structure.

Clause 102. The apparatus of any one of clauses 95 to 101, wherein the mounting structure further comprises one or more flexible joints, and wherein the one or more flexible joints are associated with wind management.

Clause 103. The apparatus of any one of clauses 95 to 102, wherein the mounting structure is flexible and is capable of rolling around an elongated core.

Clause 104. A method comprising receiving, from one or more measurement devices, a trigger event.

Clause 105. The method of clause 104, further comprising adjusting, based on the trigger event, a height of a first row of vertical solar panels, wherein the first row of vertical solar panels comprises a plurality of vertically-installed solar panels.

Clause 106. The method of clause 104 or clause 105, wherein the trigger event is associated with one or more of: time of day; inter-row shading; or a power production level.

Clause 107. The method of any one of clauses 104 to 106, wherein at least one measurement device of the one or more measurement devices is an optimizer associated with the solar panels.

Clause 108. The method of any one of clauses 104 to 107, wherein the adjusting the height of the first row of vertical solar panels further comprises: adjusting the height of the first row of vertical solar panels so that an inter-row shading between the first row of vertical solar panels and a second row of vertical solar panels is increased.

Clause 109. The method of any one of clauses 104 to 108, wherein the adjusting the height of the first row of vertical solar panels further comprises: adjusting a tension of a cable associated with the first row of vertical solar panels, wherein the cable is configured to hang the plurality of vertically-installed solar panels.

A support structure may be anchored at an installation site for solar panels. The support structure may comprise a hanging cable for hanging solar panels. A plurality of solar panels may be deployed onto the hanging cable via a plurality of connectors. The plurality of solar panels may be interconnected with spacers. Each panel of the plurality of solar panels may comprise at least one of the plurality of connectors. The plurality of solar panels may be locked on the hanging cable via the plurality of connectors. The support structure may further comprise at least two poles. The at least two poles may be anchored. The hanging cable between the at least two poles may be stretched. The plurality of solar panels may be moved out of a packaging along a guiding member of the packaging. The guiding member may be configured to be attached to the support structure and aligned with the cable. Each panel may comprise at least two of the plurality of connectors. The at least two of the plurality of connectors may be attached to a top end of the panel. Each panel may further comprise at least one additional connector attached to a bottom end of the panel. The at least one additional connector may be configured to connect to an additional cable. The solar panels may be vertical solar panels.

A support structure may be anchored at an installation site for solar panels. The support structure may comprise at least two anchoring poles. A plurality of solar panels may be fixedly connected to a cable. The plurality of solar panels may be deployed to the support structure, for example, by fastening the cable to the at least two anchoring poles. The plurality of solar panels may be moved out of a packaging along a guiding member of the packaging. The guiding member may be configured to be attached to the support structure. The plurality of solar panels may be interconnected with spacers. The plurality of solar panels may be interconnected with at least one rigid wire for restricting movements of the plurality of solar panels. The plurality of solar panels may be interconnected with at least one wire. The at least one wire may be fastened to the support structure, for restricting movements of the plurality of solar panels. The solar panels may be vertical solar panels.

A plurality of solar panels may be connected with spacers. Each panel of the plurality of solar panels may comprise at least one cable connector at an end of the panel. Each panel may be connected with a first link member. Each panel may be attached to a first guiding member of a packaging. The first link member may be movably attached to the first guiding member. The at least one cable connector may be configured to connect to a hanging cable. The first guiding member may be configured to align to the hanging cable. Each panel of the plurality of solar panels may further comprise at least one wire connector at a different end of the panel. The plurality of solar panels may be connected to a wire, using the at least one wire connector of each panel. Each panel may be connected with a second link member. Each panel may be attached with a second guiding member of the packaging. The second link member may be movably attached to the second guiding member. The first link member and the second link member may be connected to different ends of each panel. One or more electrical components may be incorporated in each of the spacers. The solar panels may be vertical solar panels.

A plurality of rows of vertical solar panels may be installed. Each row may use a hanging cable to hang a plurality of vertical solar panels. The plurality of rows may be connected with each other, using at least one additional cable. The plurality of vertical solar panels may be connected with each other via a wire. The at least one additional cable may intersect with one or both of the hanging cable and the wire.

A solar panel or a PV module may be manufactured, based on a deformable material and a reinforcing structure. The reinforcing structure may be configured to reinforce the deformable material. The solar panel may be configured to be hung. Tensile forces may be exerted to the reinforcing structure. The deformable material may be overmolded on the reinforcing structure. The reinforcing structure may comprise a plurality of wires. The plurality of wires may be substantially parallel. The reinforcing structure may be positioned between layers of the deformable material. The reinforcing structure may extend beyond the deformable material. The reinforcing structure may comprise a plurality of resistance structures for reinforcing connection with the deformable material. The reinforcing structure may comprise a connection part for hanging the solar panel. One or more holes may be formed at selected locations in the solar panel. The one or more holes may be for one or more of: wind management; load management; rigidity management; or shade management. One or more frames may be mounted at selected locations in the solar panel. At least one frame of the one or more frames may be configured to hang the solar panel. One or more frames may be mounted at selected locations in the solar panel. At least one frame of the one or more frames may be configured to allow the solar panel to lock, under self-weight, in the at least one frame. One or more flexible joints may be formed at selected locations in the solar panel. The one or more flexible joints may be for wind management.

A plurality of solar panels or PV modules may be pre-rolled on an elongated core. The plurality of solar panels may be flexible. The plurality of solar panels may be configured to be hung. The elongated core may be configured to allow a hanging structure pass through. The hanging structure may be configured to hang the plurality of solar panels. A cable may be passed through the elongated core. The cable may be configured to be stretched for hanging the plurality of solar panels. The elongated core may be configured to be a hanging structure for hanging the plurality of solar panels. The pre-rolled solar panels may be hung. The pre-rolled solar panels may be unrolled.

A first trigger event may be received, from one or more measurement devices, for example, by a controller. Based on the first trigger event, a height of a first row of vertical solar panels or PV modules may be adjusted. The first row of vertical solar panels may comprise a plurality of vertically-installed solar panels. At least one solar panel of the plurality of vertically-installed solar panels may be a bifacial solar panel. The plurality of vertically-installed solar panels may be hung. The first trigger event may be associated with time of day. The first trigger event may be associated with inter-row shading. The first trigger event may be associated with a power production level. At least one measurement device of the one or more measurement devices may be an optimizer associated with the solar panels. The height of the first row of vertical solar panels may be adjusted, so that an inter-row shading between the first row of vertical solar panels and a second row of vertical solar panels may be increased. A tension of a cable associated with the first row of vertical solar panels may be adjusted. The cable may be configured to hang the plurality of vertically-installed solar panels. A second trigger event may be received, from the one or more measurement devices, for example, by the controller. Based on the second trigger event, the adjustment for the height of the first row of vertical solar panels may be stopped.

A tension of a first cable associated with a first row of solar panels or vertical PV modules may be adjusted. The first cable may be at a first height after adjustment. The first row of vertical solar panels may comprise a plurality of vertically-installed first solar panels that may be hung on the first cable. A tension of a second cable associated with a second row of vertical solar panels may be adjusted. The second cable may be at a second height after adjustment. The second row of vertical solar panels may comprise a plurality of vertically-installed second solar panels that may be hung on the second cable. The first height may be smaller than the second height. An area of inter-row shading between the first row of vertical solar panels and the second row of vertical solar panels may be decreased after the adjusting the tension of the first cable. A trigger event may be received from one or more measurement devices. The adjusting the tension of the first cable and the adjusting the tension of the second cable may be based on the trigger event. The trigger event may be associated with time of day. The trigger event may be associated with inter-row shading. At least one measurement device of the one or more measurement devices may be an optimizer associated with one or more of: the first solar panels; or the second solar panels.

A first trigger event associated with inter-row shading between a first row and a second row may be received, from one or more measurement devices, for example, by a controller. Each row of the first row and the second row may comprise a plurality of vertically-installed solar panels or PV modules. Based on the first trigger event, a height of the first row and/or the second row may be adjusted. At least one measurement device of the one or more measurement devices may be an optimizer associated with the solar panels. A second trigger event associated with inter-row shading between the first row and the second row may be received, from the one or more measurement devices, for example, by the controller. Based on the second trigger event, adjustment for the height of the first row and/or the second row may be stopped. The plurality of vertically-installed solar panels may be hung. At least one solar panel of the plurality of vertically-installed solar panels may be a bifacial solar panel.

A support structure may be anchored at an installation site for solar panels. The support structure may comprise at least two anchoring poles. A guiding member of a packaging may be attached to the support structure. A plurality of solar panels may be moved out of the packaging along the guiding member and onto the support structure. The support structure may further comprise a hanging cable configured to hang the plurality of solar panels, the hanging cable being stretched between the at least two anchoring poles. The guiding member may be aligned with the hanging cable. The plurality of solar panels may be preassembled to a hanging cable. The hanging cable may be fastened to the at least two anchoring poles. The plurality of solar panels may be interconnected with spacers. The spacers may be configured to hold one or more electrical components. The plurality of solar panels may be connected, via a wire, with an adjacent row of solar panels.

Tensile forces may be exerted to a reinforcing structure. A deformable material may be overmolded on the reinforcing structure. A solar panel that is configured to be hung may be formed. The reinforcing structure may comprise a plurality of wires, and the plurality of wires may be substantially parallel. The reinforcing structure may extend beyond the deformable material. One or more holes may be formed at selected locations in the solar panel. The one or more holes may be associated with one or more of: wind management; load management; rigidity management; or shade management. One or more frames may be mounted at selected locations in the solar panel. At least one frame of the one or more frames may be associated with attaching the solar panel to a hanging structure. One or more flexible joints may be formed at selected locations in the solar panel. The one or more flexible joints may be associated with wind management. The solar panel may be flexible. The solar panel may be rolled around an elongated core. The elongated core may be hollow. A hanging structure may be passed through the elongated core. The elongated core may be configured to be used as a hanging structure for the solar panel, based on the solar panel being unrolled.

A first trigger event may be received, from one or more measurement devices, for example, by a controller. Based on the first trigger event, a height of a first row of vertical solar panels may be adjusted. The first row of vertical solar panels may comprise a plurality of vertically-installed solar panels. The first trigger event may be associated with one or more of: time of day; inter-row shading; or a power production level. At least one measurement device of the one or more measurement devices may be an optimizer associated with the solar panels. The height of the first row of vertical solar panels may be adjusted, so that an inter-row shading between the first row of vertical solar panels and a second row of vertical solar panels may be increased. A tension of a cable associated with the first row of vertical solar panels may be adjusted. The cable may be configured to hang the plurality of vertically-installed solar panels. A second trigger event may be received, from the one or more measurement devices, for example, by the controller. Based on the second trigger event, the adjustment for the height of the first row of vertical solar panels may be stopped.

Although the examples described herein may use a flexible or stretchable cable to hang or suspend the panels, other hanging structures may be used, for example, a rigid and/or horizontal pole. The cable for hanging the panels may be more than one cable. For example, there may be horizontally parallel cables. The cable may conduct electricity. The cable may be a grounding cable. The solar panels may be bifacial. The solar panels may be mono-facial (e.g., only one side with photovoltaic cells). The solar panels may be in other forms and have other characteristics. For example, the panels may have more than two sides with photovoltaic cells. For example, the panels may be cross-panels (e.g., two sub-panels crossing each other to form a panel) that may cover more orientations. The panels may be of different shapes, for example, curved, circular, T-shape, Z-shape, etc. The panels may be flexible (e.g., without any glass). The flexible panels may be in the form of rolls before deployment. The panels may be tilted/rotated in a controlled way. For example, a panel may be connected to an upper cable and a lower cable, and the lower cable may rotate the panel around the upper cable. For example, a panel may be connected to an upper cable, a middle cable, and a lower cable, and the upper/lower cable may rotate the panel around the middle cable. Additional devices or components (e.g., a motor, sensor, etc.) may be used, for example, to trigger unrolling of pre-rolled solar panels based on installation. For example, a motor (e.g., a servo motor) may be used for controlling the positions of the panels. The panels and/or related structures (e.g., the support structure) may provide additional functions besides power generation. For example, lights (e.g., LED lights) may be attached to the bottom of the panels and/or to the frames (e.g., via holes) for illumination for an area (e.g., farm, parking lot, etc.). The lights may be used together with a control system for monitoring purposes such as showing faults, detection results, etc. For example, a light may turn red to indicate a faulty optimizer. A light may turn green if nothing is detected under that panel (e.g., for marking an empty parking space). Other systems such as an irrigation system may be attached to provide additional functions, such as controlled and efficient water sprays for crops, and/or so on. Cameras (static or mobile) may be used to monitor not only partial shading between rows but also crops to determine general condition of crops and if more sunlight is needed or more shade is needed. The adjustment of heights of vertical solar panels may also be determined based on agricultural (e.g., crops) needs. For example, crops' needs for sunlight may change dynamically, for example, during a day. The heights of vertical solar panels may be adjusted with a balance between agricultural needs and power production.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the disclosure. Accordingly, the foregoing description is by way of example only, and is not limiting.

## Claims

1. A system comprising:
a plurality of solar panels;
a packaging comprising a guiding member, wherein the plurality of solar panels are configured to be assembled along the guiding member in the packaging; and
a support structure comprising at least two anchoring poles, wherein the support structure is configured to be installed at an installation site via the at least two anchoring poles, and wherein the support structure is configured to be attachable to the guiding member.

2. The system of claim 1, wherein the support structure further comprises a hanging cable configured to hang the plurality of solar panels between the at least two anchoring poles, and the hanging cable is configured to align with the guiding member.

3. The system of claim 1 or claim 2, wherein the plurality of solar panels are interconnected with spacers, and wherein the spacers are configured to hold one or more electrical components.

4. An apparatus comprising:
a plurality of photovoltaic cells;
a mounting structure attached to at least one side of the plurality of photovoltaic cells; and
one or more electrical components disposed at the mounting structure and electrically connected with the plurality of photovoltaic cells, wherein
the mounting structure comprises a reinforcing structure overmolded with a deformable material, and wherein
the reinforcing structure is preloaded with tensile forces.

5. The apparatus of claim 4, wherein the reinforcing structure comprises a plurality of wires, and the plurality of wires are substantially parallel.

6. The apparatus of claim 4 or claim 5, wherein the mounting structure is configured to be hung.

7. The apparatus of any one of claims 4 to 6, wherein the mounting structure further comprises one or more holes, and wherein the one or more holes are associated with one or more of:
wind management;
load management;
rigidity management; or
shade management.

8. The apparatus of any one of claims 4 to 7, wherein the mounting structure further comprises one or more frames, and wherein at least one frame of the one or more frames is associated with attaching the mounting structure to a hanging structure.

9. The apparatus of any one of claims 4 to 8, wherein the mounting structure further comprises one or more flexible joints, and wherein the one or more flexible joints are associated with wind management.

10. The apparatus of any one of claims 4 to 9, wherein the mounting structure is flexible and is capable of rolling around an elongated core.

11. A method comprising:
receiving, from one or more measurement devices, a trigger event; and
adjusting, based on the trigger event, a height of a first row of vertical solar panels, wherein the first row of vertical solar panels comprises a plurality of vertically-installed solar panels.

12. The method of claim 11, wherein the trigger event is associated with one or more of:
time of day;
inter-row shading; or
a power production level.

13. The method of claim 11 or claim 12, wherein at least one measurement device of the one or more measurement devices is an optimizer associated with the solar panels.

14. The method of any one of claims 11 to 13, wherein the adjusting the height of the first row of vertical solar panels further comprises:
adjusting the height of the first row of vertical solar panels so that an inter-row shading between the first row of vertical solar panels and a second row of vertical solar panels is increased.

15. The method of any one of claims 11 to 14, wherein the adjusting the height of the first row of vertical solar panels further comprises:
adjusting a tension of a cable associated with the first row of vertical solar panels, wherein the cable is configured to hang the plurality of vertically-installed solar panels.
